# EUROPÄISCHE PATENTSCHRIFT

(11) **EP 3 180 275 B1**
(45) Veröffentlichungstag und Bekanntmachung des Hinweises auf die Patenterteilung: **27.12.2017**
(21) Anmeldenummer: 15748247.2
(22) Anmeldetag: 10.08.2015
(51) Int. Cl.: B65G 1/137

(54) **LAGER- UND KOMMISSIONIERSYSTEM UND VERFAHREN ZUM SEQUENZIERTEN BEREITSTELLEN VON ARTIKELN**
STORAGE AND ORDER-PICKING SYSTEM AND METHOD FOR PROVIDING ARTICLES IN A PARTICULAR ORDER
SYSTÈME DE STOCKAGE ET DE PRÉPARATION DE COMMANDES ET PROCÉDÉ POUR FOURNIR DES ARTICLES DE MANIÈRE SÉQUENCÉE

(30) Priorität: 11.08.2014 DE 102014111385; 11.08.2014 DE 102014111396
(43) Veröffentlichungstag der Anmeldung: 21.06.2017
(73) Patentinhaber: SSI Schäfer Automation GmbH, 97232 Giebelstadt (DE)
(72) Erfinder: HOFMANN, Christian, 97084 Würzburg (DE)
(74) Vertreter: Witte, Weller & Partner Patentanwälte mbB
(86) Internationale Anmeldenummer: PCT/EP2015/068390
(87) Internationale Veröffentlichungsnummer: WO 2016/023869

(56) Entgegenhaltungen:
- EP-A1- 2 573 013
- EP-A1- 2 607 292
- EP-A1- 2 786 946
- WO-A1-2011/089063
- WO-A2-2009/143335
- DE-A1-102015 001 540
- JP-A- H11 116 006
- JP-A- 2003 285 906
- JP-A- 2011 102 166
- US-A- 4 508 484
- US-A1- 2013 251 480
- US-B1- 6 997 666

## Beschreibung

Die vorliegende Erfindung betrifft ein Lager- und Kommissioniersystem. Ferner betrifft die vorliegende Erfindung ein Verfahren zum sequenzierten Ein- und Auslagern von Artikeln in eine und aus einer Regalanordnung, um die Artikel sequenziert, z.B. in einer aufsteigenden Reihenfolge, und auftragsorientiert beispielsweise an einer Zielstelle (z.B. Kommissionier-Arbeitsplatz) bereitzustellen. Zu diesem Zweck wird insbesondere ein fahrerloses Transportsystem (FTS) mit autonomen, fahrerlosen Transportfahrzeugen (FTF) eingesetzt. Eine klassische Vorzone, die durch Stetigförderer geprägt ist, wird durch eine FTF-Ebene ersetzt. Die Erfindung kommt insbesondere bei "Case-Picking"-Szenarien zum Einsatz.

Die vorliegende Erfindung betrifft ferner ein System zum Be- und Entladen eines Stückguts bzw. Artikels auf ein und von einem FTF.

Sowohl beim "Case-Picking" als auch beim "Piece-Picking" werden Lagerbehältnissen auftragsorientiert aus einem Lager zu einem Kommissionier-Arbeitsplatz zwecks Artikelentnahme und -abgabe transportiert. Das Lager weist Regale auf, in denen die Artikel mit oder ohne Ladungsträger bevorratet sein können. Die Ein- und Auslagerung der Artikel erfolgt mittels Regalbediengeräten, deren Lastaufnahmemittel (LAM) üblicherweise horizontal und ggf. vertikal in Regalgassen beweglich sind, die zwischen den Regalen definiert sind. Die Regalbediengeräte werden über Vertikalförderer bzw. Lifte mit den Artikeln versorgt, die wiederum stirnseitig an den Regalen und Regalgassen angeordnet sind. Eine derartige Anordnung wird z.B. in dem Dokument US 7,261,509 B offenbart. Die Lifte fördern die Artikel vertikal zu einer Fördertechnik-Ebene, die sich ebenfalls stirnseitig an die Regale und Regalgassen anschließt. Diese Fördertechnik-Ebene wird auch als "Vorzone" bezeichnet.

Die Vorzone weist üblicherweise eine Vielzahl von Fördertechnik-Stichstrecken auf, die als Pufferstrecken eingesetzt werden, um die jeweiligen Regalgassen fördertechnisch mit einem Sortierkreisel zu verbinden, der die ausgelagerten Artikel in eine gewünschte Reihenfolge bringt, d.h. die Artikel in der gewünschten Reihenfolge an eine oder mehrere Zielstellen (z.B. Kommissionierarbeitsplatz) abgibt. Eine Vorzone mit Pufferstrecken zwischen einem zentral angeordneten Sortierkreisel und stirnseitig angeordneten Liften ist in dem Dokument US 2010/300048 A1 offenbart. Da die Pufferstrecken und der Sortierkreisel jeweils einen unveränderbaren Streckenverlauf aufweisen und da der Sortierkreisel eine begrenzte Aufnahmekapazität hat, ist es erforderlich, dass die Regalbediengeräte und die Lifte, die zwei separate Sequenzierungsstufen darstellen, die Artikel vorsequenzieren. Dies bedeutet, dass die Regalbediengeräte die Artikel in einer vorbestimmten Reihenfolge auslagern (erste Sqeuenzierungsstufe), die grob, aber nicht exakt, der gewünschten Reihenfolge entspricht. Wenn mehrere Regalbediengeräte übereinander betrieben werden, stellt eine (Regal-)Ebene, aus welcher die Lifte die von den Regalbediengeräten bereitgestellten Artikel abholen, um sie vertikal in Richtung Vorzone zu transportieren, eine weitere, zweite Sequenzierungsstufe dar. In einer dritten Sequenzierungsstufe (Sortierkreisel) erfolgt die finale Sequenzierung in Form einer Abgabe an die Zielstelle(n). Ein Planungs- und Steueraufwand ist in diesem Fall also erheblich, um die Artikel in der gewünschten Reihenfolge zum Arbeitsplatz (Zielstelle) zu bringen. Die Planung muss in drei Stufen vorab erfolgen und beginnt bereits mit der Auswahl eines der Regalbediengeräte. Die Regalbediengeräte müssen dann sequenzbedingt mitunter sehr weite Wege innerhalb der Regalgassen zurücklegen, um einen durch die (Vor-)Sequenz vorgegebenen Artikel auszulagern und zu dem stirnseitigen Lift zu bringen.

Ein weiteres Problem stellt ein für das System zur Verfügung stehende Raum dar. Die Vorzone ist dem Lager in der Regel stirnseitig vorgelagert. Die Vorzone ist üblicherweise (im Vergleich zum Lager) relativ klein. Die in der Vorzone eingesetzten Stetigförderer (z.B. Rollenbahnen, Gurt- bzw. Bandförderer, Riemenförderer, Kettenförderer, etc.) haben einen festen und nicht - ohne weiteres - veränderbaren Streckenverlauf. Nach einer Inbetriebnahme der Anlage ist der Streckenverlauf, insbesondere in der Vorzone, eigentlich fest vorgegeben und unveränderbar. Die fördertechnischen Komponenten der Vorzone sind gerade wegen des spärlichen Raums für Wartungsarbeiten oftmals schwer zugänglich. Das Dokument DE 101 36 354 A1 offenbart in seiner Fig. 1 einen relativ komplexen Streckenverlauf der Fördertechnik in der Vorzone, um zwei Arbeitsplätze über zwei separate Fördertechnikkreisläufe mit Lagerbehältern zu versorgen. In der Regel wird die Vorzone von einer weiteren Fördertechnik für Auftragsbehälter durchquert, so dass noch weniger Raum zur Verfügung steht.

Unter einem "Stetigförderer" (engl. Steady conveyor) ist ein Förderer zu verstehen, der Fördergut (Schütt- oder Stückgut) in einem stetigen Fluss von einer oder mehreren Aufgabestellen (Quellen) zu einer oder mehreren Abgabestellen (Zielen) transportiert. Beispiele für Stetigförderer sind: Gurtförderer, Rollenförderer, Kettenförderer und Kreisförderer. Typische Merkmale von Stetigförderern sind: kontinuierlicher/diskretkontinuierlicher Fördergutstrom, Zentralantrieb im Dauerbetrieb, Be- und Entladung im Betrieb, stets aufnahme-/abgabebereit, und ortsfeste Einrichtungen. Die kontinuierliche Arbeitsweise ermöglicht den Transport relativ großer Mengen in kurzer Zeit (im Vergleich zu Unstetigförderern).

Ein stirnseitiger Transfer der Artikel aus und in die Regale über die stirnseitig angeordneten Lifte stellt einen Durchsatzengpass dar. Unter einem Durchsatz wird nachfolgend eine Anzahl von Ein-/Auslagerungen pro Zeiteinheit bzw. eine Anzahl von Picks pro Zeiteinheit verstanden. In dem Dokument WO 2007/134840 A, welches auf die Patentanmelderin zurückgeht, wird ein Lager-Layout offenbart, das sich von der stirnseitigen Anordnung der Lifte abwendet. Die WO 2007/134840 A schlägt vor, jeweils mehrere Lifte seitlich an den Längsseiten der Regale zu positionieren, um den Durchsatz - im Vergleich zu stirnseitig angeordneten Liften - zu erhöhen. Diese Vielzahl von Liften ist aber wiederum an konventionelle Stetigförderer gekoppelt, die die ausgelagerten Artikel zu in der Regl weit entfernten (Kommissionier-)Arbeitsplätzen bringen. Durch den Einsatz von Stetigförderern in der Vorzone ist bei der WO 2007/134840 A weiterhin eine Vorsequenzierung mittels der Regalbediengeräte innerhalb des Lagers bzw. innerhalb der Regale erforderlich. Die Stetigförderer benötigen außerdem relativ viel Platz und erschweren somit u.a. eine räumliche Verdichtung des Lager-Layouts.

Ein anderer konzeptioneller Ansatz ist in dem Dokument EP 2 044 494 A1 beschrieben. Dort werden autarke Fahrzeuge (Shuttle) offenbart, die Kleinstregale innerhalb einer Aktionsfläche von einem Lagerbereich in einen Kommissionierbereich bewegen. Dies bedeutet, dass zu kommissionierende Artikel nicht aus den Regalen ausgelagert und mittels den Fahrzeugen zu Arbeitsplätzen transportiert werden, sondern dass die Fahrzeuge die Regale direkt an die Arbeitsplätze transportieren. Aber auch hier ist der Planungsaufwand erheblich. Die Sequenzierung ist erschwert, weil ganze Regale in der richtige Reihenfolge (und Orientierung) zum Arbeitsplatz gebracht werden müssen.

Das Dokument DE 10 2008 039 764 A1 offenbart fahrerlose Transportfahrzeuge mit oberseitig angebrachten, kammzinkenartigen Auflagerstegen, auf denen Güter transportiert werden. Diese kammzinkenartigen Stege kämmen mit horizontal angeordneten, zueinander beabstandeten Rollen einer Rollenbahn, die die Güter von den Stegen auskämmen oder die die Güter an die Stege abgeben. Die Güter werden senkrecht zu einer Fahrtrichtung des Transportfahrzeugs zugeführt und abgeführt. Das Fahrzeug kann während eines Transfers kontinuierlich durch die Rollen der Rollenbahn hindurchfahren. Jedoch werden dazu zwingend Anschläge benötigt, um die Güter während des Transfers zu halten. Zum Entladen des Fahrzeugs reicht ein statischer Anschlag aus. Zum Beladen des Fahrzeugs werden bewegliche Anschläge benötigt.

Beim Entladen der Fahrzeuge wird relativ viel Zeit benötigt, da die abgegebenen Güter erst seitlich über die Rollenbahn abgeführt werden müssen, bevor ein nachfolgendes Fahrzeug sein Gut an die Rollenbahn abgeben kann. Ähnliches gilt bei einem Beladevorgang. Ein nachfolgendes Fahrzeug kann erst beladen werden, wenn das vorausfahrende Fahrzeug sein Gut vollständig aufgenommen hat. Dies bedeutet, dass sowohl beim Entladen als auch beim Beladen Abstände eingehalten werden müssen bzw. Lücken zwischen aufeinanderfolgenden Gütern oder Fahrzeugen generiert werden. Die Be- und Entladung kann also nicht in Form eines kontinuierlichen Stroms erfolgen, bei dem die Güter unmittelbar ohne Abstände aufeinanderfolgen bzw. fließen.

Beim Beladen der Fahrzeuge muss der Anschlag bewegt werden, da der Anschlag das abzugebende Gut zuerst festhalten und dann freigeben muss. Für die Bewegung des Anschlags sind mechanische Kulissen oder gesteuerte Aktuatoren erforderlich. Aktuatoren müssen gesteuert werden, so dass eine entsprechende Steuerung benötigt wird.
Das Dokument JP 2011 102166 A offenbart ein Kommissioniersystem mit autonomen, fahrerlosen Fahrzeugen, wobei Transportrouten hinsichtlich Kosten optimiert werden.

Es ist daher eine erste Aufgabe der vorliegenden Erfindung ein Lager- und Kommissioniersystem sowie ein Verfahren bereitzustellen, die sich durch einen erhöhten Durchsatz und verbesserte Sequenzierungsmöglichkeiten auszeichnen, insbesondere im Bereich der (klassischen) Vorzone. Ferner ist es wünschenswert, einen Sequenzierungsaufwand zu reduzieren bzw. mehr Freiheiten in ausgewählten Bereichen, z.B. innerhalb der Regale, hinsichtlich von Optimierungen zu ermöglichen. Die Regalbediengeräte sollten vorzugsweise wegoptimiert betrieben werden, ohne eine Sequenzierung berücksichtigen zu müssen.

Diese erste Aufgabe wird gelöst durch ein Lager- und Kommissioniersystem des Anspruchs 1 WO 2007/134840 A1 offenbart ein Lager- und Kommissioniersystem gemäß dem Oberbegriff des Anspruschs 1.

Die Substitution der klassisch in der Vorzone verwendeten Stetigförderer durch eine Flotte von autonomen FTF sowie die Verlagerung und Erweiterung der Vorzone unter die, über die oder durch die Regalanordnung hindurch, ermöglichen eine freie Zuordnung einer sehr großen Anzahl von Quellen (Vertikalförderern) zu Senken (Arbeitsplätzen). Jeder Arbeitsplatz kann von jedem Vertikalförderer mit Artikeln versorgt werden, weil FTF eingesetzt werden, die in der FTF-Ebene frei verfahrbar sind. FTF-Fahrwege können beliebig definiert werden, da sie aus einer nahezu unendlichen Vielzahl von Segmenten zusammensetzbar sind. Die Anzahl der möglichen Wege zwischen einer Quelle und einer Senke erhöht sich im Vergleich zu klassischen Stetigförderern erheblich, weil auf deren fixe Streckenverläufe verzichtet wird.

Die Regalbediengeräte, die in den Regalgassen zum Ein- und Auslagern der Artikel eingesetzt werden, lagern chaotisch aus. Auf die üblicherweise mit den Regalbediengeräten verknüpfte Sequenzierungsstufe kann verzichtet werden. Die Regalbediengeräte können wegoptimiert auslagern, was in einer Erhöhung des Durchsatzes (Auslagerungen pro Zeiteinheit) resultiert. Der Materialflussrechner wird entlastet, weil ein mit den Regalbediengeräten verknüpfter Planungsaufwand hinsichtlich einer Sequenzierung entfällt.

Das System ist service- und wartungsfreundlicher, weil die FTF in der FTF-Ebene im Vergleich zur klassischen Fördertechnik in der oftmals sehr beengten Vorzone besser zugänglich ist. Außerdem gibt es keine Probleme hinsichtlich Fluchtwegen.

Die FTF können in der FTF-Ebene mittels Kameras überwacht werden, so dass fehlerbehaftete bzw. stillstehende FTF leicht lokalisierbar sind.

Die materialflusstechnische Verbindung (Streckenführung) zwischen den Vertikalförderern (Start/Zielstelle) und den Arbeitsplätzen (Ziel/Startstelle) kann jederzeit geändert werden, was eine neue Zuordnung der Vertikalförderer zu den Arbeitsplätzen jederzeit ermöglicht.

Die damit erzielte Vereinfachung des Materialflusses von den Vertikalförderern zu den Arbeitsplätzen ermöglicht es, mehr Arbeitsplätze bei gleichbleibender Gesamtfläche mit Artikeln zu versorgen. Außerdem kann auf beliebige Bereiche des Lagers zugegriffen werden.

Die Gesamtleistung des Systems wird gesteigert.

Vorzugsweise erstreckt sich die FTF-Ebene zumindest über eine Fläche, die die Vertikalförderer einschließt. Insbesondere erstreckt sich die FTF-Ebene zumindest über eine Fläche, die zusätzlich die Regale und die Regalgassen der Regalanordnung (in einer Draufsicht) im Wesentlichen vollständig einschließt.

Somit ist jeder der Vertikalförderer für die FTF in der FTF-Ebene erreichbar, was wiederum jede beliebige Zuordnung der Vertikalförderern zu den Arbeitsplätzen erlaubt. Die Vertikalförderer wiederum stellen die materialflusstechnische Verbindung zwischen den Regalen und der FTF-Ebene bzw. den Arbeitsplätzen her.

Die Verlagerung der FTF-Ebene unter die, über die bzw. in die Regalanordnung hinein, lässt eine Basisfläche des Systems unverändert und erhöht ggf. lediglich die erforderliche Gesamthöhe um die Höhe der FTF-Ebene.

Bestehende Lager- und Kommissioniersysteme, die eine klassische Vorzone mit Stetigförderern aufweisen, können umgerüstet werden, um die Vorteile der vorliegenden Erfindung zu erzielen.

Bei einer besonderen Ausgestaltung definiert jeder der individuellen Fahraufträge einen von mehreren möglichen Fahrwegen von einem der Vertikalförderer zu dem mindestens einen Arbeitsplatz für das entsprechende FTF und jeder der individuellen Fahraufträge weist Sequenz- und Überholinformationen auf, damit solche der FTF, die den mindestens einen der Arbeitsplätze auftragsorientiert mit den Lagergütern versorgen, einander überholen können und die Lagergüter in der absoluten Reihenfolge an den mindestens einen Arbeitsplatz übergeben.

Die FTF-spezifischen Fahrwege bzw. Fahraufträge werden vom Flottenmanager so berechnet, dass die Artikel bzw. Lagergüter in der absoluten Reihenfolge beim Arbeitsplatz ankommen. Der Flottenmanager wählt den Verlauf des Fahrwegs, Start- und Ankunftszeiten, Überholmanöver, Fahrgeschwindigkeiten und Ähnliches so, dass die chaotisch von den Vertikalförderern angelieferten Artikel in der aufsteigenden oder absteigenden Reihenfolge am Arbeitsplatz ankommen. Die endgültige Sequenzierung erfolgt also in der FTF-Ebene.

Ferner ist es von Vorteil, wenn jeder der Vertikalförderer an mehrere Transferplätze grenzt, die jeweils vorzugsweise regalintegriert ausgebildet sind.

Diese Maßnahme erleichtert die Wegoptimierung der auslagernden Regalbediengeräte, weil diese Regalbediengeräte immer einen nahe liegenden Transferplatz anfahren können, der frei ist.

Bei einer weiteren bevorzugten Ausgestaltung ist ferner ein Materialflussrechner vorgesehen, der zum Erzeugen von wegoptimierten Transportaufträgen für die Regalbediengeräte und Vertikalförderer eingerichtet ist.

Somit bewegen sich zwei der für den Materialfluss verantwortlichen Komponenten, nämlich die Regalbediengeräte und vorzugsweise auch die Vertikalförderer, wegoptimiert. Dies bedeutet, dass die Regalbediengeräte und die Vertikalförderer möglichst kurze Wege beim Transportieren der Artikel zurücklegen.

Vorzugsweise ist jedes der FTF lastaufnahmemittellos mit einer passiven Aufnahme ausgebildet.

Diese Maßnahme verringert den Steuerungsaufwand und reduziert die Herstellungs- und Vertriebskosten der FTF, die üblicherweise in einer großen Anzahl in der FTF-Ebene benötigt werden.

Vorzugsweise weist die Fahrfläche ferner mindestens eine Sequenzierungsharfe auf.

Weiter ist es von Vorteil, wenn die Regalbediengeräte die Artikel wegoptimiert auslagern.

Die Regalbediengeräte legen möglichst kurze Wege innerhalb der Regalgasse zurück, um die für den Kommissionierauftrag benötigten Artikel auszulagern und insbesondere auch an die Transferplätze abzugeben. Die entsprechende Sequenzierungsstufe für die Regalbediengeräte entfällt, so dass sich ein Planungsaufwand reduziert. Die Auslagerleistung in der Regalanordnung wird gesteigert.

Dies gilt umso mehr, wenn auch die Vertikalförderer wegoptimiert betrieben werden.

In diesem Fall wird zusätzlich auf die Sequenzierungsstufe verzichtet, die durch die Vertikalförderer realisierbar ist. Der Planungsaufwand in der Regalanordnung wird hinsichtlich einer Sequenzierung weiter reduziert. Die Auslagerleistung der Regalanordnung wird erhöht.

Vorzugsweise weist das System eine Vielzahl von Arbeitsplätzen auf, wobei jeder der Arbeitsplätze mittels der FTF hinsichtlich eines Materialflusses über mehrere mögliche, frei zusammensetzbare Fahrwege an jeden der Vertikalförderer koppelbar ist.

Hier kommt wiederum die freie Zuordenbarkeit der Quellen zu den Senken zum Ausdruck. Eine transportlogistische Zuordnung der Vertikalförderer zu den Arbeitsplätzen - und somit zu den Kommissionieraufträgen - lässt sich jederzeit ändern, z.B. um Spitzenbelastungen an einem Arbeitsplatz der Vertikalförderer auszugleichen.

Insbesondere weist die Topologie ferner Ortsangaben zu den Vertikalförderern und zu anderen Fahrhindernissen in der Fahrfläche auf.

Auf diese Weise ist es möglich, die Fahrwege der FTF so zu planen, dass sie ohne Staus oder Stopps zu ihren Zielen gelangen.

Die oben erwähnte erste Aufgabe wird ferner gelöst durch ein Verfahren nach Anspruch 13.

Vorzugsweise erfolgt die Auslagerung der Artikel durch die Regalbediengeräte wegoptimiert.

Die FTF-Ebene erstreckt sich insbesondere über eine Fläche, die die Vertikalförderer einschließt und die vorzugsweise zusätzlich die Regale und die Regalgassen der Regalanordnungen im Wesentlichen einschließt.

Ferner wird ein System zum Entladen eines Stückguts von einem FTF offenbart, das aufweist: ein FTF, das eine Oberseite aufweist; eine Aufnahme für ein FTF, die auf der Oberseite des FTF angebracht ist und die zum Transportieren des Stückguts eingerichtet ist; und einen Trennförderer, der eine endlos umlaufende Fördereinrichtung aufweist, die in einer Förderrichtung parallel zur Fahrrichtung angetrieben ist; wobei die Aufnahme eingerichtet und so relativ zum Trennförderer auf dem FTF angebracht ist, dass der Trennförderer in einem eingetauchten Zustand kämmend durch die Aufnahme hindurch bewegbar ist, wenn das FTF den Trennförderer unterfährt..

Das System ermöglicht eine lückenlose, d.h. kontinuierliche, Beladung der Transportfahrzeuge. Das System ermöglicht auch einen lückenlosen Strom von entladenen Stückgütern. Dies ist möglich, weil auf Anschläge verzichtet wird, die die Stückgüter während eines Transfers halten. Dies ist ferner möglich, weil die Be- und Entladung parallel zur Fahrrichtung, insbesondere in der Fahrrichtung, des FTF erfolgt, während sich das FTF kontinuierlich durch den Trennförderer hindurchbewegt. Der Trennförderer ist angetrieben und fördert die Stückgüter somit in der gleichen Richtung, wie das FTF durch den Trennförderer hindurchfährt.

Bei einer besonderen Ausgestaltung definiert der Trennförderer eine plane Förderfläche, die einen spitzen Winkel mit der Transportfläche einschließt.

Der Trennförderer taucht dann kämmend in die Transportfläche ein, um das Stückgut aktiv aufgrund seines Antriebs auszuheben.

Vorzugsweise weist die Aufnahme an ihrem in einer Fahrrichtung des FTF stromabwärts gelegenen Ende fingerartige Vorsprünge auf, die senkrecht aus der Transportfläche hervorstehen.

Die fingerartigen Vorsprünge verhindern beim Beladen des FTF, dass das Stückgut vom FTF herunterfällt bzw. in Fahrrichtung vorn über das FTF übersteht. Die fingerartigen Vorsprünge wirken als Anschläge. Die fingerartigen Vorsprünge unterstützen die Positionierung der Stückgüter an einer gewünschten, vorgegebenen Position auf der Aufnahme selbst.

Bei einer besonderen Ausgestaltung weist die Aufnahme eine Vielzahl von Stützlamellen zum Transportieren des Stückguts darauf auf, wobei die Stützlamellen parallel zu einer Fahrrichtung des FTF ausgerichtet sind, wobei jede der Stützlamellen eine Oberseite aufweist, auf der das Stückgut deponierbar ist, wobei die Oberseiten der Stützlamellen eine im Wesentlichen plane Transportfläche definieren, wobei die Stütziamellen in einer Querrichtung, die senkrecht zur Fahrrichtung orientiert ist, so zu einander beabstandet sind, dass in der Transportfläche ein, vorzugsweise regelmäßiges, Muster aus parallelen, sich längs erstreckender Lücken ausgebildet ist, wobei jede der Lücken eine Mindesttiefe aufweist, und wobei die Fördereinrichtung eine Vielzahl von Einzelförderern aufweist, die derart kammzinkenartig parallel zur Fahrrichtung des FTF angeordnet sind, dass die Einzelförderer berührungslos in die Lücken in der Transportfläche eintauchen, wenn die Aufnahme durch den Trennförderer hindurch bewegt wird.

Insbesondere weisen die Stützlamellen in einer Seitenansicht einen L-förmigen Querschnitt auf.

Die Stützlamellen sind einfach herzustellen. Die L-Form des Querschnitts resultiert in den gewünschten fingerartigen Vorsprüngen am stromabwärts gelegenen Ende der Stützlamellen.

Bei einer weiteren vorteilhaften Ausführungsform werden die Einzelförderer während eines Ent- oder Beladevorgangs mit einer Fördergeschwindigkeit bewegt, die einer Fahrgeschwindigkeit des FTF im Wesentlichen entspricht.

Diese Wahl der Geschwindigkeiten unterstützt die kontinuierliche, lückenlose Be- und Entladung der Stückgüter.

Bei einer weiteren Ausgestaltung ist ferner ein angetriebener Stetigförderer vorgesehen, der gegenüberliegend zu einem höher gelegenen Ende des Trennförderers angeordnet ist.

Vorzugsweise sind genauso viele Einzelförderer wie Lücken vorgesehen.

Diese Maßnahme verhindert, dass ein kleines Stückgut durch den Trennförderer hindurchfällt.

Bei einer weiteren Ausgestaltung ist jeder der Einzelförderer ein endlos umlaufender Riemenförderer oder ein, vorzugsweise angetriebener, Röllchenförderer.

Bei einer weiteren Ausgestaltung ist der Trennförderer ein endlos umlaufender Bandförderer und die Aufnahme weist eine Anordnung von flexiblen Bürsten auf, die eingerichtet ist, die Stückgüter in einem Mindestabstand zur Oberseite des FTF zu tragen, wobei die Bürsten derart flexibel sind, dass der in die Aufnahme eintauchende Trennförderer die Bürsten umlegt und die Bürsten sich nach einer Durchfahrt selbsttätig wieder aufrichten.

Insbesondere ist ein Endbereich des Bandförderers, der in die Aufnahme eintaucht, schwenkbar ausgebildet.

Ferner wird eine Pufferstation mit dem erfindungsgemäßen System zum Be- und Entladen sowie mit einer angetriebenen Puffer-Fördertechnik vorgeschlagen. Außerdem wird ein Arbeitsplatz mit dem erfindungsgemäßen System zum Be- und Entladen und mindestens einer angetriebenen Pufferbahn vorgeschlagen, die sich an den Trennförderer anschließt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Lager- und Kommissioniersystems;
- Fig. 2: ein FTF mit Aufsatz (Fig. 2A) und ein FTF ohne Aufsatz (Fig. 2B);
- Fig. 3: eine Materialflussrechnerarchitektur;
- Fig. 4: eine perspektivische Ansicht einer FTF-Ebene unterhalb einer Regalanordnung;
- Fig. 5: eine Draufsicht auf einen Teil einer FTF-Ebene;
- Fig. 6: ein Blockdiagramm in Draufsicht zur Verdeutlichung einer Zuordnung von Vertikalförderern zu Arbeitsplätzen;
- Fig. 7: eine Draufsicht (Fig. 7A) auf eine FTF-Ebene zur Verdeutlichung möglicher Fahrwege und eine Draufsicht (Fig. 7B) auf eine Topologie zur Verdeutlichung möglicher Segmente;
- Fig. 8: zeigt eine Seitenansicht eines ersten Systems (Fig. 8A) zum Be- und Entladen von Stückgütern und eine Seitenansicht eines zweiten Systems (Fig. 8B) zum Be- und Entladen von Stückgütern;
- Fig. 9: zeigt eine perspektivische Ansicht einer Beladestation und einer Entladestation, die eine Materialflussverbindung zwischen einem FTS und Stetigförderern herstellen;
- Fig. 10: eine perspektivische Ansicht einer Pufferstation;
- Fig. 11: eine perspektivische Ansicht eines Arbeitsplatzes; und
- Fig. 12: ein Flussdiagramm.

Wenn im Nachfolgenden von vertikalen bzw. horizontalen Orientierungen gesprochen wird, versteht es sich von selbst, dass Elemente, die mit diesen Orientierungen verknüpft sind, jederzeit durch eine entsprechende Drehung miteinander vertauscht werden können, so dass derartige Orientierungen nicht einschränkend zu verstehen sind.

Wie in der (Intra-)Logistik üblich, werden in Lager- und Kommissioniersystemen (Distributionsanlagen, Materialhandhabungsanlagen, etc.) eine Längsrichtung mit "X", eine Querrichtung mit "Z" und eine Höhenrichtung mit "Y" bezeichnet. Die Richtungen X, Y und Z definieren vorzugsweise ein kartesisches Koordinatensystem.

Unter einer Lageranordnung bzw. einer Regalanordnung 14 wird nachfolgend eine Vielzahl von Regalen 16 verstanden, die meist parallel in Form von Einzelregalen oder Doppelregalen angeordnet sind. Doppelregale sind Einzelregale, die Rücken an Rücken aufgestellt sind. Die Regale 16 erstrecken sich im Wesentlichen längs. Regalgassen 18 sind quer zwischen den Regalen 16 definiert und dienen als Aktionsraum für Regalbediengeräte 22 und Artikeltransfers. Die Regale 16 enden an sich jeweils gegenüberliegenden (kurzen) Stirnseiten, die wiederum in einer Ebene senkrecht zur Längsrichtung bzw. zu den (langen) Längsseiten der Regale 16 und zu den Regalgassen 18 orientiert sind. Die Regale 16 selbst weisen eine Vielzahl von (Regal-)Lagerplätzen bzw. Stellplätzen R auf, die in übereinanderliegenden Regalebenen angeordnet sind. Eine Regalzeile erstreckt sich in der horizontalen Richtung innerhalb eines Lagers und weist üblicherweise viele Lager- bzw. Stellplätze R übereinander und nebeneinander auf.

Unter einem "Artikel" wird nachfolgend eine Lager- und/oder Kommissioniereinheit innerhalb eines Lager- und Kommissioniersystems 10 verstanden. Die Lagereinheit, die auch als Lagergut bezeichnet wird, kann ein Lagerladehilfsmittel sowie den Artikel selbst umfassen. Die Lagereinheit kann aber auch nur den Artikel umfassen, wenn man das Lagerladehilfsmittel weglässt. Als Lagerladehilfsmittel werden üblicherweise Ladehilfsmittel eingesetzt, wie z.B. Paletten, Gitterboxen, Container, Behälter, Kartons, Tablare, (Hänge-)Taschen und Ähnliches. Unter einem "Artikel" ist insbesondere ein Stückgut zu verstehen. Die Artikel sind durch einen Artikeltyp unterscheidbare (kleinste) Einheiten eines Artikelsortiments. Stückgüter sind individualisierte, unterscheidbare Artikel, die einzeln gehandhabt werden können und deren Bestand stückweise oder als Gebinde (Case) geführt wird. Ein "Gebinde" ist ein allgemeiner Begriff für eine handhabbare Ladeeinheit, die manuell oder mittels technischem Gerät (z.B. Fördertechnik, Regalbediengerät, Lastaufnahmemittel, etc.) bewegt werden kann. Auch eine Untermenge einer Ladeeinheit, z.B. ein Getränkekasten auf einer voll mit Getränkekästen beladenen Palette, wird als Gebinde bezeichnet. Die Begriffe "Artikel", "Gebinde", "Lagergut" und "Stückgut" werden nachfolgend gleichwertig verwendet.

Die Begriffe "Regalplatz", "Lagerplatz", "Stellplatz", "Palettenplatz" und "Speicherplatz" werden äquivalent benutzt. Mit diesen "Plätzen" sind Orte innerhalb des Systems 10 gemeint, wo die Artikel bevorratet werden. Ein "Regalplatz" ist ein Ort, wo die Artikel innerhalb einer Lagereinrichtung (auch langfristig) zum Zwecke einer Kommissionierung bereitgehalten werden. Ein "Transferplatz" ist ein Regalplatz, der benachbart zu einem Vertikalförderer angeordnet ist. Der Transferplatz dient einer vorübergehenden Pufferung eines oder mehrerer Artikel und ist materialflusstechnisch mit dem entsprechenden Vertikalförderer verbunden, um den oder die Artikel mit dem Vertikalförderer auszutauschen. Der Transferplatz dient einer Entkopplung der Vertikalförderer von Regalbediengeräten. Die Vertikalförderer müssen für einen Artikeltransfer nicht auf die Regalbediengeräte warten und umgekehrt.

Bei der Erfindung können verschiedene Typen von Förderern zum Einsatz kommen (z.B. Rollenförderer, Gurtförderer, Kettenförderer, Hängeförderer, Riemenförderer, Bandförderer, etc.). Die Begriffe "Förderer" und "Fördertechnik" werden nachfolgend äquivalent benutzt. Eine Fördertechnik umfasst im Wesentlichen alle technischen und organisatorischen Einrichtungen (z.B. Antriebe, Sensoren, Weichen, Steuerungselemente, etc.) zum Bewegen oder Transportieren von Fördergütern (d.h. Artikeln) und zum Lenken von Materialströmen.

Des Weiteren arbeitet die vorliegende Erfindung im Wesentlichen nach dem Prinzip "Ware zum Mann". Bei dem "Ware-zum-Mann"-Prinzip werden die zu kommissionierenden Artikel zu einer Bedienperson hin transportiert, damit die Bedienperson, die nachfolgend auch als "Kommissionierer" bezeichnet werden wird, aus Gründen einer besseren Ergonomie möglichst wenig bis gar nicht laufen muss, um einen Kommissioniervorgang (auftragsorientiertes Greifen und Abgeben von Artikeln) durchzuführen. Die zu kommissionierenden Artikel werden mittels den Ladehilfsmitteln innerhalb des Systems 10 transportiert, insbesondere von und zu Pick-Stationen (d.h. Kommissionierarbeitsplätzen) und Vertikalförderern 20.

Ein (Kommissionier-)"Auftrag" besteht aus einer oder mehreren Auftragspositionen, die auch als Auftragszeilen bezeichnet werden. Eine Auftragszeile gibt eine jeweilige Menge (Stückzahl) eines Artikeltyps an, den ein Kunde bestellt hat.

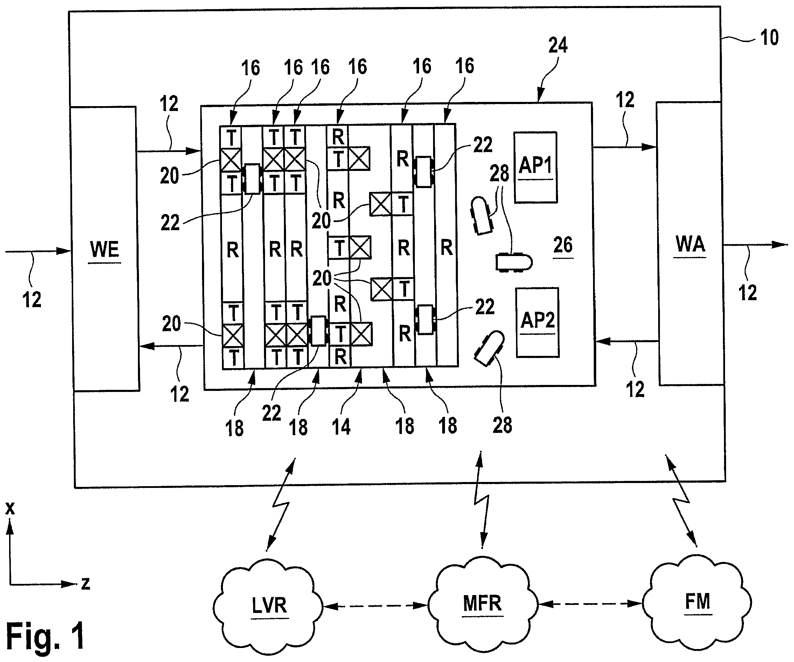

Fig. 1 zeigt ein Blockdiagramm eines Lager- und Kommissioniersystems 10, das z.B. als Distributionsanlage eines Einzelhändlers oder eines Online-Händlers verwendet werden kann. Das Lager- und Kommissioniersystem 10 wird nachfolgend auch kurz als "System 10" bezeichnet werden.

Das System 10 weist einen Wareneingang WE sowie einen Warenausgang WA auf. Ein Materialfluss 12 innerhalb und außerhalb des Systems 10 ist durch Pfeile verdeutlicht. Der Materialfluss 12 erfolgt innerhalb des Systems 10 vorzugsweise unter Einsatz von Regalbediengeräten 22, Vertikalförderern 20 und einem fahrerlosen Transportsystem (FTS). Gegenfalls wird auch konventionelle Fördertechnik eingesetzt.

Zwischen dem Wareneingang WE und dem Warenausgang WA der Fig. 1 ist eine Regalanordnung 14 mit mehreren Regalen 16 vorgesehen, die zwischen sich (Regal-)Gassen 18 definieren. Die Regale 16 erstrecken sich im Wesentlichen in der Längsrichtung X und sind in der Querrichtung Z zueinander beabstandet. Der Materialfluss 12 in der Höhenrichtung Y (senkrecht zur Zeichnungsebene) erfolgt innerhalb der Regalanordnung 14 im Wesentlichen mittels Vertikalförderern 20. Die Vertikalförderer 20 werden auch als Lifte bezeichnet. Dabei handelt es sich vorzugsweise um Stetigförderer, die den Materialfluss 12 ausschließlich in der vertikalen Richtung Y durchführen. Die Vertikalförderer 20 sind stationär, d.h. sie bewegen sich nicht relativ zu den Regalen 16. Die Vertikalförderer 20 können außerhalb und innerhalb der Regale 16 angeordnet sein. Bei einer Anordnung innerhalb der Regale 16 spricht man von Regal-integrierten Vertikalförderern 20. Eine entsprechende Regalanordnung 14 mit Regal-integrierten Vertikalförderern 20 ist exemplarisch in der WO 2012/113681 beschrieben, auf die diesbezüglich Bezug genommen wird. Derartige Regal-integrierte Vertikalförderer 20 sind in der Fig. 1, insbesondere in den ersten drei Regalen 16 von links gezeigt. Neben den Regal-integrierten Vertikalförderern 20 können ergänzend und/oder alternativ weitere Vertikalförderer 20 innerhalb der Regalgassen 18 vorgesehen sein. Eine derartige Anordnung ist exemplarisch in der WO 2007/134840 A1 beschrieben, auf die diesbezüglich Bezug genommen wird. In der Fig. 1 ist die zweite Regalgasse 18 von rechts sehr breit gewählt. Diese Regalgasse 18 kann in Z schmaler ausgelegt werden, so dass jeder der Vertikalförderer 20 an beide Regale 16 links und rechts angrenzt. Die Zwischenräume in X können mit Regalplätzen R aufgefüllt werden.

In der Regalanordnung 14 sind den Regalen 16 immer mehrere Vertikalförderer 20 zugeordnet, die entweder innerhalb der Regale 16 oder in den Regalgassen 18 über die Längsrichtung X verteilt, angeordnet sind. Die (materialflusstechnische) Zuordnung kann aber auch über eine Regalgasse 18 hinweg erfolgen, wie es exemplarisch für das Regal 16 der Fig. 1 gezeigt ist, das am weitesten rechts angeordnet ist. In und an dem am weitesten rechts angeordneten Regal 16 der Fig. 1 ist überhaupt kein Vertikalförderer 20 angeordnet. Die materialflusstechnische Anbindung erfolgt über das oder die Regalbediengeräte 22 an das links daneben angeordnete Regal 16.

Die Regalbediengeräte 22 (nachfolgend auch "RBG" genannt) holen nicht näher bezeichnete und gezeigte Lagergüter bzw. Artikel aus den Regalplätzen R in den Regalen 16 ab, oder lagern sie in die Regalplätze R in den Regalen 16 ein. Zu diesem Zweck verfügen die RBG 22 über nicht näher bezeichnete und gezeigte Lastaufnahmemittel (nachfolgend auch "LAM" genannt), mit denen die Lagergüter bzw. Artikel zwecks Ein- und Auslagerung im Wesentlichen in der Z-Richtung bewegt werden. Die RBG 22 bewegen sich im Wesentlichen innerhalb der Regalgassen 18 und dienen dem Materialfluss 12 in der X-Richtung innerhalb der Regalanordnung 14. Wenn die RBG 22 über hier nicht näher gezeigte und bezeichnete Maste verfügen, decken die RBG 22 den Materialfluss 12 auch in der Höhenrichtung Y ab. Die Regale 16 können vertikal modular aufgebaut sein, wobei pro Modul mindestens ein RBG 22 vorgesehen ist. Die RBG 22 fahren in der Regel schienengeführt. Entsprechende Schienen sind nicht dargestellt.

Ohne Mast und ohne Hubfunktion bedienen die RBG 22 nur eine einzige Regalebene. Man spricht in diesem Fall von Einebenen-Regalbediengeräten, die auch als Shuttle (ohne Hubfunktion) bezeichnet werden. Alle RBG-Typen können verwendet werden.

Generell gilt, dass sich die RBG 22 vorzugsweise nur innerhalb der Regalanordnung 14 bewegen. Der Materialfluss 12 außerhalb der Regalanordnung 14, z.B. von und zu (Kommissionier-)Arbeitsplätzen AP, erfolgt im Wesentlichen mittels autonomen, fahrerlosen Transportfahrzeugen 28 (nachfolgend auch als "FTF" bezeichnet), die in der Intralogistik auch als "Shuttle" bezeichnet werden. Diese FTF bzw. Shuttle 28 bewegen sich außerhalb der Regalanordnung 14 in einer FTF-Ebene 24, die eine Fahr- bzw. Aktionsfläche 26 aufweist.

In der Fig. 1 sind exemplarisch zwei Arbeitsplätze AP1 und AP2 gezeigt. Die Arbeitsplätze AP sind vorzugsweise entlang der oder den Längsseiten der Regalanordnung 14 in der FTF-Ebene 24 angeordnet, so dass der Materialfluss 12 zu den Arbeitsplätzen mittels der FTF 28 im Wesentlichen in der Querrichtung Z erfolgt. Es können mehr oder weniger Arbeitsplätze AP vorgesehen werden. Die Arbeitsplätze AP sind in der Fläche 26 angeordnet und über die FTF 28 materialflusstechnisch an die Regalanordnung 14 gekoppelt. Die FTF-Ebene 24 kann, vorzugsweise in Form einer einzigen flachen, horizontalen Ebene unterhalb, oberhalb oder innerhalb der Regalanordnung 14 vorgesehen sein. Die FTF-Ebene 24 ist materialflusstechnisch über die Vertikalförderer 20 mit den Regalen 16 verbunden.

Im Fall einer Kommissionierung an einem der Arbeitsplätze AP1 oder AP2 lagern die RBG 22 die entsprechenden Artikel auftragsorientiert aus den Regalplätzen R aus, transportieren die ausgelagerten Artikel im Wesentlichen horizontal zu Transferplätzen T, die gegenüberliegend zu den Vertikalförderern 20 innerhalb der Regale 16 anstatt von Regalplätzen R angeordnet sind und die zum Austauschen der Artikel mit den Vertikalförderern 20 eingerichtet sind. Die Vertikalförderer 20 holen die auf den Transferplätzen T, vorzugsweise doppeltief, gepufferten Artikel ab und transportieren sie in der vertikalen Richtung Y in die FTF-Ebene 24. In der FTF-Ebene 24 werden die von den Vertikalförderern 20 bereitgestellten Artikel an die FTF 28 abgegeben, die die abgegebenen Artikel wiederum zu den entsprechenden Zielstellen, nämlich z.B. den Arbeitsplätzen AP1 und/oder AP2 fahren. Entsprechende Fahrwege (Routen im navigationstechnischen Sinne) werden auftrags- und sequenzorientiert von einem Flottenmanager FM (Steuerungssoftware inkl. entsprechender Hardware) bestimmt und individuell an die FTF 28 kommuniziert. Der Flottenmanager FM kann Teil eines übergeordneten Materialflussrechners MFR (Hard- und Software) sein, der wiederum Teil eines Lagerverwaltungsrechners (Hard- und Software) LVR sein kann. In der Fig. 1 sind diese Steuerungskomponenten FM, MFR und LVR als voneinander unabhängige, separate Komponenten gezeigt.

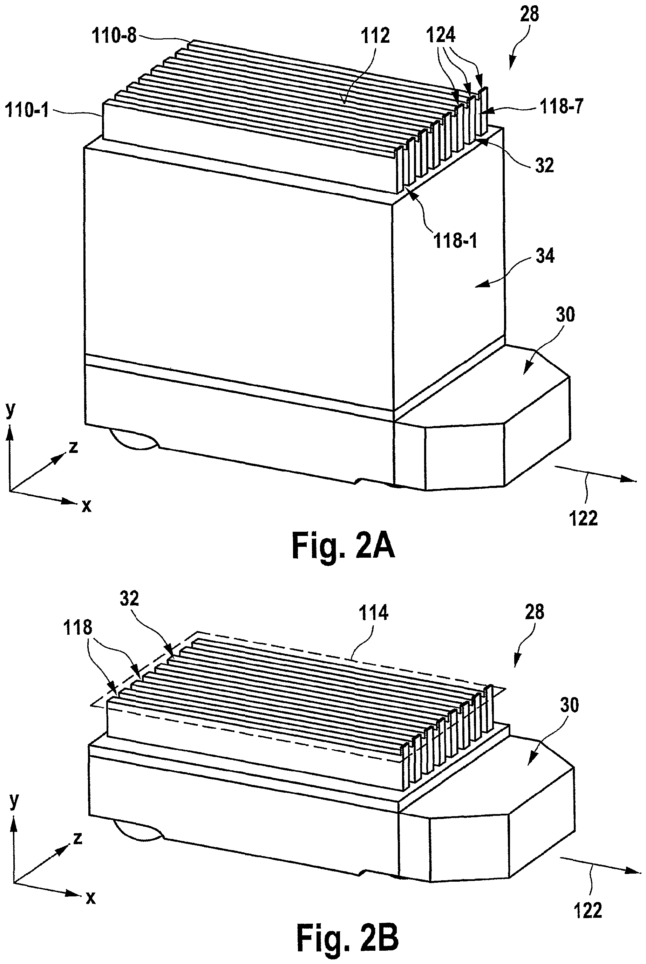

Die Figuren 2A und 2B zeigen perspektivische Ansichten einer ersten Ausführungsform eines FTF 28. Fig. 2A zeigt ein FTF 28, welches zum Arbeiten in Hüfthöhe eines Kommissioniers geeignet ist, indem zwischen einem eigentlichen Fahrzeug 30 und einer z.B. lamellenförmigen (Artikel-)Aufnahme 32 ein (Erhöhungs-)Aufsatz 34 vorgesehen ist, so dass sich eine Oberseite der Aufnahme 32 in einer Höhe von ca. 700 mm befindet. In der Fig. 2B ist das gleiche Fahrzeug 30 mit einer Artikelaufnahme 32, aber ohne Aufsatz 34 gezeigt.

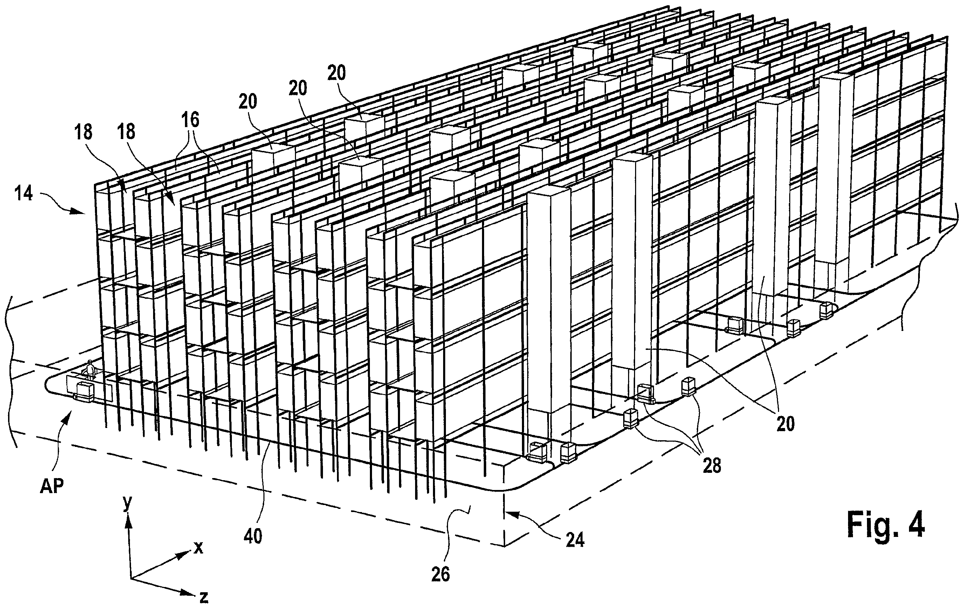

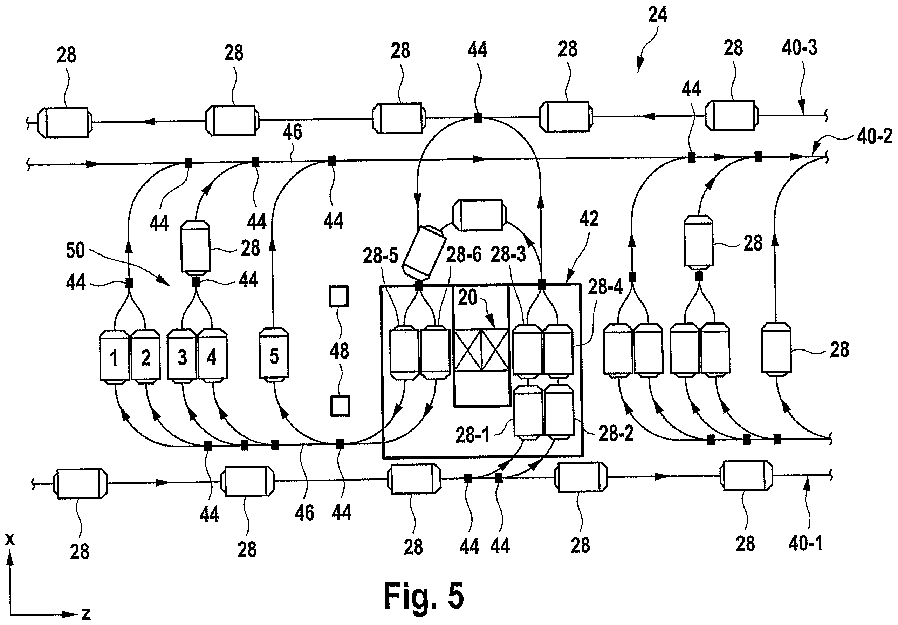

Generell handelt es sich bei den FTF 28 um automatisiert geführte Fahrzeuge, die Transportaufgaben in dem System 10 schnell, billig und skalierbar lösen. Die FTF 28 bewegen sich vorzugsweise entlang einem vordefinierten Transportnetzwerk, welches z.B. durch schwarze Linien ausgebildet ist, die auf einen Boden der Fläche 26 geklebt oder gemalt sind (siehe auch Fig. 4). Entlang dieses Transportnetzwerks können bspw. mehrere RFID-Marker als Implementierung von Wegpunkten 44 vorgesehen werden, die exemplarisch in Fig. 5 gezeigt sind. Eine Linie zwischen zwei benachbarten Wegpunkten 44 wird nachfolgend als Segment 46 bezeichnet. Es versteht sich die Segmente 46 auch in Form von virtuellen Verbindungslinien realisiert sein können, z.B. wenn ein internes GPS- oder Laser-Navigationssystem eingesetzt wird. Analoges gilt für die Wegpunkte 44. Die geometrische Abmessung der Fläche 26, die Wegpunkte 44 und die Segmente 46 definieren eine Topologie der FTF-Ebene 24. Diese Topologie ist als "Karte" der FTF-Ebene 24 ggf. einschließlich Ortbeschreibungen der Vertikalförderer 20, Regalsteher und sonstiger (Fahr-)Hindernisse zu verstehen.

Die FTF 28 können Artikel puffern sowie von und zu vorgegebenen Stationen (z.B. den Arbeitsplätzen AP) hin transportieren oder von dort abholen. Eine Be- und Entladung der FTF 28 erfolgt vorzugsweise passiv. Dies bedeutet z.B., dass die FTF 28 keine Sensoren zum Identifizieren des Artikels oder zum aktiven Initiieren von Be- und Entladevorgängen aufweist. Eine passive Be- und Entladung z.B. unter Verwendung von Rampen, wird nachfolgend unter Bezugnahme auf Fig. 8ff noch näher beschrieben werden.

Exemplarische FTF 28 sowie deren Komponenten und Steuerungsverfahren sind in der DE 10 2012 023 999 A1, DE 20 2013 010 696 U1 und DE 10 2012 006 738 A1 beschrieben, auf die hier Bezug genommen wird.

Eine Gruppe von zusammengehörigen FTF 28 in dem gemeinsamen Transportnetzwerk wird nachfolgend auch als Flotte bezeichnet. Eine Flottensteuerung (Erzeugen, Vergeben und Kontrollieren von FTF-Fahraufträgen) erfolgt durch den Flottenmanager FM. Die Flottensteuerung kann z.B. als separate Java-Anwendung ausgeführt sein, die über TCP (WiFi) mit den FTF 28 verbunden ist und die über ein anderes, vorzugsweise proprietäres, Kommunikationsprotokoll (LAN) mit dem Materialflussrechner MFR verbunden ist. Darauf wird später noch näher eingegangen werden.

Jedes der FTF 28 kann eine oder mehrere der nachfolgend genannten Komponenten aufweisen: eine Kamera, um den schwarzen Linien des Transportnetzwerks zu folgen; einen Abstandssensor zum Erfassen von Hindernissen oder anderen FTF 28 in der Umgebung; ein WiFi-Modul zum Kommunizieren mit dem Flottenmanager FM; einen austauschbaren (Energie-)Akkumulator; einen Mikrocomputer bzw. Mikrocontroller für eine lokale Fahrzeugsteuerung; ein Speicher-Modul zum Hinterlegen von Informationen z.B. zur Topologie und von Fahraufträgen; und/oder ein RFID-Lesegerät zum Erfassen der Wegpunkte 44. Die Wegpunkte 44 können auch als QR-Codes realisiert sein. Die Energieversorgung kann alternativ über PowerCaps erfolgen, die an Austauschstationen ausgetauscht werden können, wobei zusätzlich auch induktive Ladestationen eingesetzt werden können.

Jedes der FTF 28 ist eingerichtet, den schwarzen Linien zu folgen und einen minimal erforderlichen Abstand zu anderen, insbesondere vorausfahrenden, FTF 28 einzuhalten. Während eines Betriebs empfangen die FTF 28 jeweils eine Liste von Segmenten 46 vom Flottenmanager FM, die nacheinander passiert werden müssen und die einen oder mehrere FTF-spezifische Fahraufträge bzw. Fahrwege definieren. Für jedes der FTF 28 wird ein individueller Fahrweg bzw. eine Route durch den Flottenmanager FM berechnet. Jedes der FTF 28 hat Kenntnis von der Topologie des Transportnetzwerks, z.B. um von einem Wegpunkt 44 zu einem benachbarten Wegpunkt 44 gemäß spezifisch ausgewählten Segmenten 46 zu fahren, oder um eine Fahrzeit zu berechnen, oder an vorbestimmten Positionen anzuhalten. Zu diesem Zweck wird die Topologie des Transportnetzwerks vom Flottenmanager FM an die FTF 28 vorzugsweise während eines Systemstarts übermittelt.

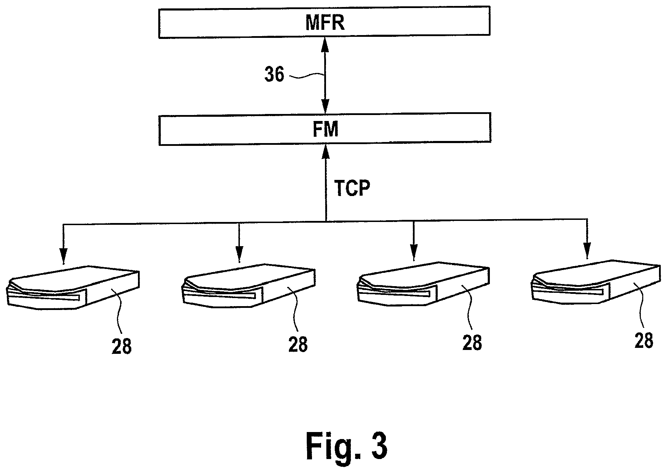

Fig. 3 zeigt allgemein eine Architektur der FTF 28 und deren Steuerung. Der Materialflussrechner MFR ist ein gewöhnliches Steuersystem, um Transporte in einem Lager unter Verwendung unterschiedlicher Hardware-Systeme zu organisieren. Der Materialflussrechner MFR kommuniziert über ein (vorzugsweise proprietäres) Kommunikationsprotokoll 36 mit dem Flottenmanager FM. Jedes der FTF 28 wird einem Flottenmanager FM zugewiesen, wobei jedes Transportnetzwerk vorzugsweise von einem eigenen Flottenmanager FM gesteuert wird. Es versteht sich, dass mehrere Flottenmanager FM parallel in einem System 10 betrieben werden können. Dann gibt es aber auch mehrere Flotten von FTF 28.

Der Flottenmanager FM repräsentiert allgemein ein Steuerungsmodul für alle FTF 28 im Transportnetzwerk. Der FM ist auch für eine Ausführung und Bestätigung von Transportaufträgen bzw. FTF-spezifischen Fahraufträgen im Transportnetzwerk verantwortlich. Die Transportaufträge erhält der FM vom MFR. Nach Erhalt der Transportaufträge wählt der FM geeignete FTF 28 aus, berechnet Fahrwege bzw. Routen und sendet die entsprechenden Listen der benötigten Segmente 46 als FTF-Fahraufträge an die ausgewählten FTF 28. Herstellerseitig sind die FTF 28 nicht mit Informationen zu einem Projekt-spezifischen Lager-Layout (Regalanordnung 14) versehen. Die erforderliche Information zur Topologie des Transportnetzwerks wird vom FM an jedes der FTF 28 z.B. während einer Konfigurationsphase übertragen. FTF-Fahraufträge und FTF-Konfigurationen werden z.B. über die TCP-Verbindung übertragen.

Eine Integration eines der FTF 28 in eine Flottensteuerung stellt einen separaten Vorgang dar. Zu diesem Zweck werden alle relevanten FTF-Parameter definiert. Entsprechende Dateien werden automatisch gelesen, wenn der FM gestartet wird. Des Weiteren werden Projekt-spezifische Netzwerkparameter an die FTF 28 übertragen. Diese Datei enthält eine Liste aller eingesetzter FTF 28 und definiert alle erforderlichen Parameter für jedes der FTF 28. Die nachfolgenden Daten können in den entsprechenden Dateien enthalten sein: eine herstellerseitig vorgesehene eindeutige Seriennummer des jeweiligen FTF 28; eine Nummer der Flotte; eine Nummer des jeweiligen FTF 28 innerhalb der Flotte; einen Heimatpunkt, z.B. ein (RFID-)Code eines Wegpunkts 44; einen Ladepunkt zum Aufladen einer Batterie der FTF 28; die IP-Netzwerkadresse des FM; ein Ladezustand; ein Störungszustand; einen Stand eines Kilometer- oder Betriebsstundenzählers; oder andere Parameter, die zur Kommunikation innerhalb des Netzwerks und zur Navigation innerhalb des Transportnetzwerks erforderlich sind.

Das Transportnetzwerk weist die Wegpunkte 44 sowie die Segmente 46 auf, die zwei Wegpunkte 44, vorzugsweise unidirektional, miteinander verbinden. Für jeden der Wegpunkte 44 ist ein eigener ID-Code vergeben. Physisch entspricht jedes der Segmente 46 einer schwarzen Linie, die gerade oder gekrümmt ausgebildet sein kann, auf dem Boden der Fläche 26 (siehe Fig. 4 und 5). Die Topologie des Transportnetzwerks, d.h. die Anordnung und die Orte der Wegepunkte 44 und der Segmente 46 dazwischen, sind dem FM und den FTF 28 bekannt. Jedoch benötigen beide Komponenten unterschiedliche Dateünformationen. Der FM benötigt z.B. lediglich eine logische Topologie des Transportnetzwerks, wohingegen die FTF 28 eine exakte Länge jedes Segments wissen sollten, um z.B. korrekt bei einem Ziel-Wegpunkt 44 anhalten zu können, indem die Fahrzeit und eine Wegstrecke zum Bremsen vorab berechnet werden.

Nachfolgend wird eine Schnittstelle zwischen dem FM und den FTF 28, insbesondere die Kommunikation zwischen ihnen, beschrieben.

Nach einem Start oder Neustart aktiviert jedes der FTF 28 eine Weg- und Abstandsteuerung. Falls ein Weg (schwarze Linie) nicht erfassbar ist, hält das FTF 28 an, ohne sich zu bewegen. Anderenfalls folgt es der Linie bis ein erster Wegpunkt 44 (z.B. RFID-Marker) erreicht ist. Falls weitere FTF 28 oder sonstige Hindernisse auf dem Weg erfasst werden, muss das betroffene FTF 28 warten. Danach sendet das FTF eine Konfigurationsanfrage an den FM, die eine Seriennummer des FTF 28 und den RFID-Code des aktuellen Wegpunkts 44 enthält. Diese Anfrage wird solange (periodisch) wiederholt, bis der FM eine geeignete Konfiguration an das anfragende FTF 28 überträgt. Die Konfigurationsantwort des FM beinhaltet die Topologie des gesamten Transportnetzwerks sowie andere Projekt-spezifische Parameter, wie z.B. eine FTF-ID und eine Flotten-ID. Das FTF 28 speichert alle Informationen und ist dann für FTF-Fahraufträge vom FM bereit.

Um eines der FTF 28 durch das Transportnetzwerk zu bewegen, sendet der FM einen FTF-Fahrauftrag an das FTF 28. Der FTF-Fahrauftrag enthält eine Auftrags-ID, die ursprünglich vom MFR kommt, sowie eine Liste der Segmente 46. Des Weiteren können optionale Parameter enthalten sein, um z.B. eine maximale Geschwindigkeit und Beschleunigung des FTF 28 festzulegen. Die Segmente 46 werden an eine aktuelle interne Route des betroffenen FTF 28 angehängt, die leer sein kann. Dies bedeutet, dass der FM die interne Route des FTF 28 erweitert. Solange eine aktuelle interne Route des FTF 28 nicht leer ist, setzt das FTF 28 seine Fahrt fort. Jedes Mal, wenn ein Wegpunkt 44 passiert wird, d.h. ein entsprechender RFID-Marker erfasst wird, entfernt das FTF 28 das erste Segment der internen Route und sendet eine FTF-Statusmeldung an den FM, die die verbleibende Route und den entsprechenden RFID-Code des letzten Wegpunkts 44 enthält. Wenn das FTF 28 das letzte Segment 46 der internen Route erreicht, verringert es automatisch seine Geschwindigkeit und hält exakt am entsprechenden Wegpunkt 44 an. Die resultierende FTF-Statusmeldung enthält dann eine leere Restroute. Der FM sendet üblicherweise immer dann einen neuen FTF-Fahrauftrag, wenn die interne Restroute nur noch maximal drei abzufahrende Segmente 46 enthält.

Nachfolgend wird eine Schnittstelle zwischen dem FM und dem MFR beschrieben. Es wird also beschrieben, wie die Kommunikation zwischen dem FM und dem MFR abläuft. Üblicherweise erfolgt diese Kommunikation über ein (proprietäres) Kommunikationsprotokoll. Zu beachten ist, dass ein FM auch mit mehreren MFR kommunizieren kann, falls es erforderlich ist.

Üblicherweise hat der MFR keine Kenntnis von der Anzahl, dem Typ oder speziellen Eigenschaften der verschiedenen FTF 28 in der Flotte. Der MFR kommuniziert lediglich mit dem FM, um eines der FTF 28 zu einem gewünschten Wegpunkt 44 zu lenken bzw. zu navigieren. Dazu muss der MFR den RFID-Code von allen relevanten Wegpunkten 44 kennen. Üblicherweise sind alle Wegpunkte 44 mit einer Beladestation oder Entladestation für die FTF 28 verknüpft, auf die nachfolgend noch näher eingegangen werden wird.

Wenn der FM einen Transportauftrag vom MFR empfängt, wählt der FM automatisch ein geeignetes FTF 28 aus. Falls das FTF 28 den Ziel-Wegpunkt 44 erreicht, sendet der FM eine entsprechende Mitteilung, dass der Transportauftrag erledigt ist, an den MFR.

Insbesondere definiert jeder Transportauftrag eine Auftrags-ID. Die Auftrags-ID wird zum Verfolgen benutzt. Die Auftrags-ID wird an das FTF 28 gesendet. Die Auftrags-ID kann aber auch verwendet werden, um eine vorherige Bewegung mit dem gleichen FTF 28 fortzusetzen, um z.B. eine Auto-Auswahl des FTF 28 durch den FM zu verhindern.

Falls der FM einen neuen Transportauftrag erhält, prüft der FM zuerst, ob es ein FTF 28 gibt, welches mit dieser Auftrags-ID verknüpft ist. Falls ja, verwendet der FM vorzugsweise dieses vorausgewählte FTF 28, um den Auftrag auszuführen. Um diese Funktion ausführen zu können, haben die FTF 28 Kenntnis von den Auftrags-IDs.

Exemplarische Transportaufträge sind: Beladeauftrag; Entladeauftrag; und/oder Fahrauftrag.

Der FM ist auch zur Vermeidung von Kollisionen an Kreuzungspunkten (Wegpunkten 44) verantwortlich.

Fig. 4 zeigt eine perspektivische Ansicht einer Ausführungsform des Systems 10, bei welcher die FTF-Ebene 24 unterhalb der Regale 16 der Regalanordnung 14 angeordnet ist und sich über eine Grundfläche der Regalanordnung 14 hinaus erstreckt. Die Vertikalförderer 20 sind seitlich relativ zu den Regalen 16 in Regalgassen 18 angeordnet. Jedes der Regale 16 ist materialflusstechnisch an mehrere der Vertikalförderer 20 gekoppelt. In der Fig. 4 sind jeweils vier nicht näher bezeichnete Regalmodule übereinander angeordnet. Jedes der Regalmodule wird von mindestens einem (nicht dargestellten) RBG 22 innerhalb der entsprechenden Regalgassen 18 bedient. In den Regalgassen 18, wo die Vertikalförderer 20 angeordnet sind, fahren keine RBG 22. Vertikal orientierte Regalsteher (Pfosten) der Regale 16 reichen in die (dreidimensionale) FTF-Ebene 24 hinein und stellen in diesem Sinne Hindernisse für die FTF 28 dar, die auf der Fahrfläche 26 entlang von Fahrwegen 40 (schwarze Linien) verfahrbar sind. Es versteht sich, dass die FTF 28 auch auf eine andere Weise automatisiert geführt werden können, wie z.B. mittels eines lokalen GPS-Systems, welches ohne die schwarzen Linien auskommt, mittels Induktionsschleifen oder mittels einer Gleitsteinführung in Nuten, die im Boden der Fläche 26 vorgesehen sind und die Fahrwege 40 bzw. die Segmente 46 definieren.

Ferner ist in der Fig. 4 in der FTF-Ebene 24 exemplarisch ein Arbeitsplatz AP gezeigt, der materialflusstechnisch über die FTF 28 an die Regale 16 angebunden ist. Die FTF 28 können sich frei unterhalb der Regale 16 entlang der Fahrwege 40 bewegen. Die FTF-Ebene 24 ist, mit Ausnahme der Regalsteher und den Gestellen der Vertikalförderer 20, barrierefrei, insbesondere frei von Regalplätzen R. Die Fahrwege 40 werden so gewählt, dass die FTF 28 nicht mit den Regalstehern oder den (Maschinen-)Gestellen der Vertikalförderer 20 kollidieren.

Fig. 5 zeigt eine Draufsicht auf einen Ausschnitt einer FTF-Ebene 24. Eine Liftanordnung 42 ist in der Fig. 5 zentral angeordnet und weist einen Vertikalförderer 20 mit zwei Plätzen auf, die in Z direkt nebeneinander angeordnet sind. So ist eine doppeltiefe Handhabung möglich. Ferner sind drei Fahrwege 40-1 bis 40-3 gezeigt, die sich im Wesentlichen horizontal in der Fig. 5 entlang der Längsrichtung X erstrecken und die sich jeweils aus einer Vielzahl von Segmenten 46 zusammensetzen. Transport- bzw. Fahrrichtungen der FTF 28 sind durch kleine schwarze Dreiecke angedeutet. Unten in der Fig. 5 verläuft ein erster Fahrweg 40-1 von links nach rechts, um die FTF 28 vom Wareneingang WE (siehe Fig. 1) zwecks Einlagerung von Artikeln in Richtung des Vertikalförderers 20 zu leiten. Parallel versetzt dazu ist darüber ein zweiter Fahrweg 40-2 gezeigt, der die FTF 28 von links nach rechts zu den Arbeitsplätzen AP leitet, z.B. zwecks Kommissionierung. Parallel dazu ist darüber ein weiterer Fahrweg 40-3 gezeigt, wo sich die FTF 28 von rechts nach links bewegen, um von den Arbeitsplätzen AP zum Warenausgang WA zu gelangen. Ferner sind die Wegpunkte 44 exemplarisch in Form kleiner schwarzer Quadrate (QR-Code, RFID-Code, Barcode, etc.) gezeigt.. Regalsteher 48 sind mit größeren schwarzen Quadraten angedeutet. Die Fahrwege 40 sind so gelegt, dass die FTF 28 nicht mit den Regalstehern 48 kollidieren.

Nachfolgend wird die Liftanordnung 42 der Fig. 5 näher betrachtet werden. Die beiden Plätze des Vertikalförderers liegen in der Richtung Z direkt nebeneinander. Das nicht näher gezeigte und bezeichnete LAM des Vertikalförderers ist dazu eingerichtet, Artikel aktiv mit den FTF 28 auszutauschen. Dazu kann der Vertikalförderer 20 z.B. in Z teleskopierbare Zinken, die mit den Aufsätzen 34 (vgl. Fig. 2) z.B. kämmen, oder seitliche Greifer aufweisen, um die Artikel doppeltief auszuheben oder abzusetzen. Das LAM des Vertikalförderers 20 kann auch zur Einfach- oder Mehrfachtiefenhandhabung der Artikel eingerichtet sein. Das LAM des Vertikalförderers 20 kann ferner über Stetigförderer verfügen, um Artikel zwischen sich und den FTF 28 zu bewegen.

Die Liftanordnung 42 umfasst einen räumlichen Bereich, in welchem Artikel zwischen den FTF 28 und dem Vertikalförderer 20 ausgetauscht werden. Rechts neben dem Vertikalförderer 20 erstrecken sich zwei Segmente 46, die im unmittelbaren Bereich des Vertikalförderers 20 parallel angeordnet sind und sich im Wesentlichen in der Querrichtung Z erstrecken. Links neben dem Vertikalförderer 20 erstrecken sich ebenfalls zwei Segmente 46, die sich im unmittelbaren Bereich der Vertikalförderer 20-1 und 20-2 wiederum parallel in der Querrichtung Z erstrecken. In der Fig. 5 sind rechts neben dem Vertikalförderer 20 vier FTF 28-1 bis 28-4 gezeigt, die Artikel zwecks Einlagerung zum Vertikalförderer 20 hin transportieren. Die FTF 28-5 und 28-6 dienen einer Auslagerung von Artikeln aus der darüber angeordneten Regalanordnung 14, die mit dem Vertikalförderer 20 auf das Niveau der FTF-Ebene 24 verbracht werden. Die FTF 28-5 und 28-6 fahren über den zweiten Fahrweg 40-2 zu einem durch einen (Kommissionier-)Auftrag vorbestimmten Arbeitsplatz AP, der in diesem Fall der Zielstelle entspricht. Auf ihrem Weg dorthin können die FTF 28-5 und 28-6 eine Sequenzierungsharfe 50 passieren.

Die Sequenzierungsharfe 50 ist in der Fig. 5 links von der Liftanordnung 42 vorgesehen und umfasst exemplarisch fünf Fahrwege 40, die sich anfänglich parallel zueinander erstrecken, um hinsichtlich einer Sequenz chaotisch ausgelagerte Artikel in eine definierte Reihenfolge zu bringen, die z.B. durch einen Kommissionierauftrag vorgegeben ist. Im Beispiel der Fig. 5 sind die Artikel aufsteigend von links nach rechts in der Reihenfolge "1-5" zu sortieren. Unabhängig davon, in welcher Reihenfolge die Artikel von den Vertikalförderern 20-1 bis 20-2 in die FTF-Ebene 24 gebracht werden, können die Artikel mittels der Sequenzierungsharfe 50 in die vorgegebene Reihenfolge gebracht werden. Die entsprechenden FTF 28 werden, sobald sie in der definierten Reihenfolge innerhalb der Sequenzierungsharfe 50 angekommen sind, über den Fahrweg 40-2 in Richtung des Arbeitsplatzes AP abgezogen. Am Arbeitsplatz AP angekommen, der in der Fig. 5 nicht gezeigt ist, können die Artikel in der vordefinierten Reihenfolge entnommen werden. Die FTF 28 sind dann vorzugsweise wieder leer und können entweder fertig kommissionierte Aufträge über den dritten Fahrweg 40-3 zum Warenausgang WA transportieren oder von dort zu den Liftanordnungen 42 zurückgeleitet werden, um weitere Artikel von den Vertikalförderern 20 abzuholen. Die leeren FTF 28 können auch in den WE fahren, um einzulagernde Artikel zu den Vertikalförderern 20 zu transportieren.

Ähnliches gilt für die FTF 28, die Artikel zur Einlagerung bereitgestellt haben. Sobald die Vertikalförderer 20 die Artikel übernommen haben, können die entsprechend geleerten FTF 28 entweder Fahraufträge annehmen, um aus der Regalanordnung 14 ausgelagerte Artikel zu den Arbeitsplätzen AP zu bringen, oder um zum Warenausgang WA zu fahren, der wiederum mit dem Wareneingang verbunden ist, um dort erneut zwecks Einlagerung beladen zu werden.

Die Sequenzierung, d.h. die Anordnung der Artikel gemäß einer gewünschten Reihenfolge, erfolgt endgültig in der FTF-Ebene 24, indem der Flottenmanager FM die FTF-Fahraufträge entsprechend berechnet, koordiniert und ausgibt. Eine Sequenzbildung im Bereich der Regalanordnung 14, die üblicherweise durch die RBG 22 beim Auslagern der Artikel aus den Regalplätzen R und/oder beim Einlagern der ausgelagerten Artikel in die Transferplätze T erfolgt, ist nicht erforderlich. Die RBG 22 (siehe Fig. 1) holen die Artikel, die zu einem Auftrag gehören, wegoptimiert ab. Wegoptimiert bedeutet, dass die Artikel ohne Berücksichtigung irgendeiner Sequenz von den RBG 22 abgeholt werden. Die abgeholten Artikel können den Vertikalförderern 20 unsequenziert, d.h. noch nicht in der gewünschten aufsteigenden oder absteigenden (absoluten) Reihenfolge, an den Transferplätzen T (Pufferplätze im Regal 16) bereitgestellt werden, wobei hier eine Vorsequenzierung erfolgen kann, insbesondere wenn die Artikel mehrfachtief gehandhabt werden. Die absolute Reihenfolge, in welcher die zu einem einzelnen Kommissionierauftrag gehörenden Artikel, z.B. gemäß einem Packmuster für den Zielladungsträger, am Arbeitsplatz AP bereitgestellt werden müssen, ist an dieser Stelle irrelevant. Die endgültige Sequenzierung erfolgt ausschließlich in der FTF-Ebene 24. Die Auswahl der Vertikalförderer 20 stellt lediglich eine optionale Vorsequenzierung dar, die vorzugsweise aber ebenfalls nicht erfolgt bzw. erfolgen muss. Die Auswahl der RBG 22 der auszulagernden Artikel innerhalb des Regals 16 erfolgt vorzugsweise ausschließlich wegoptimiert, d.h. die Wege der RBG 22 werden so kurz wie möglich gewählt, was in einer chaotischen Auslagerung aus den Regalplätzen R resultiert. Lediglich die Auswahl der Transferplätze T, an die die abgeholten Artikel von den RBG 22 abgegeben werden, kann als Vorsequenzierung berücksichtigt werden.

Die großen Artikelströme zwecks Ein- und Auslagerung können in der FTF-Ebene 24 gehandhabt werden, weil sehr viele FTF 28 frei innerhalb der FTF-Ebene 24 - entlang von vorgegebenen Fahrwegen 40 - fahren können. In der FT-Ebene 24 ist ausreichend Raum vorhanden, auch für Sequenzierungsaufgaben. Eine konventionelle Fördertechnik bietet die zur Sequenzierung benötigten Puffermöglichkeiten nicht, insbesondere nicht zur Entkopplung der Maschinen (Vertikalförderer 20, RBG 22 und Fördertechnik untereinander).

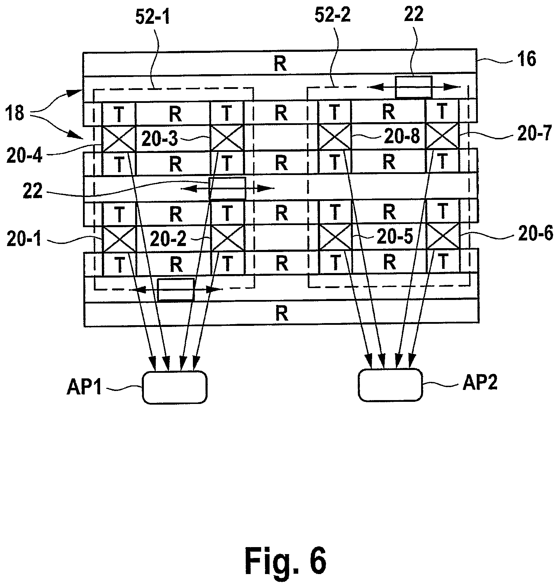

Fig. 6 dient der Illustration einer Zuordnung von Vertikalförderern 20 zu Arbeitsplätzen AP. Gezeigt sind drei nicht näher bezeichnete Regalblöcke und zwei Arbeitsplätze AP1 und AP2. Jeder Regalblock weist zwei Regale 16 auf, die eine Regalgassen 18 zwischen sich definieren, in welcher RBG 22 verfahrbar sind, um Artikel in die und aus den Regalplätzen R ein- und auszulagern. Die Vertikalförderer 20 sind zwischen den Regalblöcken angrenzend an die Regale 16 angeordnet. Es sind insgesamt acht Vertikalförderer 20-1 bis 20-8 gezeigt, die in zwei Liftgruppen 52-1 und 52-2 aufgeteilt sind. Die Vertikalförderer 20-1 bis 20-4 gehören zur ersten Liftgruppe 52-1. Die Vertikalförderer 20-5 bis 20-8 gehören zur zweiten Liftgruppe 52-2. Die erste Liftgruppe 52-1 ist dem ersten Arbeitsplatz AP1 zugeordnet. Die zweite Liftgruppe 52-2 ist dem zweiten Arbeitsplatz AP2 zugeordnet. Diese Zuordnung ist in Fig. 6 durch Pfeile angedeutet. Jeder der Lifte bzw. Vertikalförderer 20-1 bis 20-8 dient der Versorgung seines ihm zugeordneten Arbeitsplatzes AP. Der Transport der Artikel erfolgt über die FTF 28, die in der Fig. 6 nicht gezeigt sind. Jeder der Liftgruppen 52-1 und 52-2 kann eine eigene Flotte von FTF 28 zugeordnet sein. Unabhängig davon, in welcher Reihenfolge die Vertikalförderer 20 der entsprechenden Liftgruppen 52-1 bzw. 52-2 die Artikel in der FTF-Ebene 24 andienen, können die FTF 28 die angedienten Artikel in der gewünschten Reihenfolge, d.h. sequenziert, zum jeweiligen Arbeitsplatz AP transportieren.

Eine Anzahl der FTF 28, die eine Flotte bilden, kann jederzeit variiert werden. Wenn z.B. die zweite Liftgruppe 52-2 außergewöhnlich viele Artikel zum Arbeitsplatz AP2 bringen muss, können vorübergehend FTF 28, die zur ersten Flotte gehören, die wiederum der ersten Liftgruppe 52-1 zugeordnet ist, der zweiten Liftgruppe 52-2 zugeordnet werden. Alternativ kann einer der Vertikalförderer 20-1 bis 20-4 der ersten Liftgruppe 52-1 für eine gewisse Zeit der zweiten Liftgruppe 52-2 zugeordnet werden. So kann bspw. der Vertikalförderer 20-3 inkl. seiner FTF 28 für eine gewisse Zeit der zweiten Liftgruppe 52-2 zugeordnet werden.

Es versteht sich, dass die Vertikalförderer 20 einer Liftgruppe 52 auch entfernt relativ zueinander angeordnet sein können. Es ist nicht erforderlich, dass die Vertikalförderer 20 einer Liftgruppe 52 alle direkt benachbart zueinander angeordnet sind. Die FTF 28 sind in der Lage, auch weit entfernte Vertikalförderer 20 materialflusstechnisch an einen entsprechenden Arbeitsplatz AP anzubinden. Diese freie Zuordenbarkeit der FTF 28 zu den Vertikalförderern 20 bzw. zu den Arbeitsplätzen AP und die sich daraus ergebenden Materialströme sind mit einer konventionellen Vorzone bzw. deren Fördertechnik nicht darstellbar. Bei der konventionellen Fördertechnik handelt es sich um Stetigförderer, deren Streckenführung und Verlauf fest vorgegeben sind und sich nicht ohne weiteres kurzfristig, und insbesondere vorübergehend, ändern lässt.

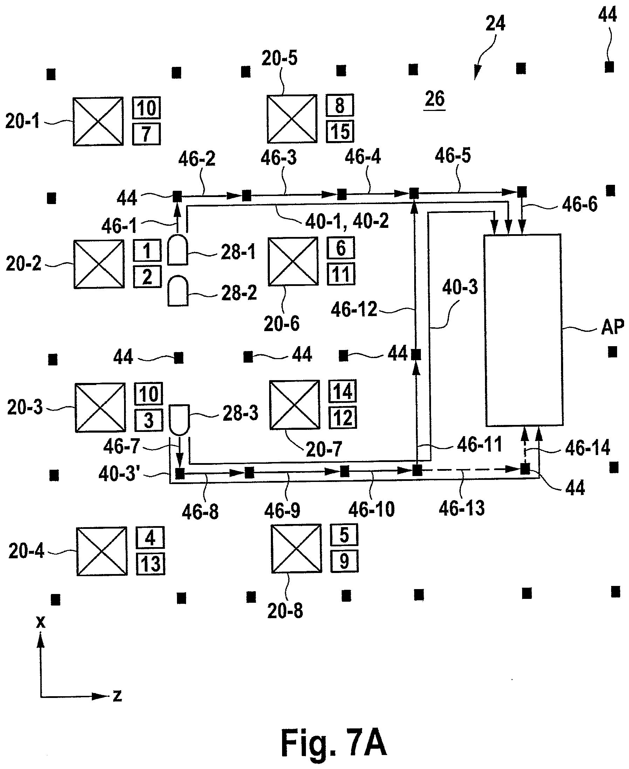

Fig. 7A dient u.a. der Verdeutlichung einer Sequenzierung. Fig. 7A zeigt eine Draufsicht auf eine FTF-Ebene 24, die exemplarisch u.a. acht Vertikalförderer 20-1 bis 20-8 sowie einen Arbeitsplatz AP (geometrisch) einschließt. Die darüber oder darunter angeordneten Regale 16 sind nicht gezeigt. Jeweils rechts neben den Vertikalförderern 20 sind zwei Rechtecke inklusive einer Zahl zwischen 1 und 16 gezeigt. Diese Rechtecke repräsentieren sechzehn Artikel, die zur Abarbeitung eines Auftrags am Arbeitsplatz AP in einer aufsteigenden Reihenfolge von #1 bis #16 benötigt werden. Diese Artikel stehen z.B. auf hier nicht dargestellten Transferplätzen T (Bzw. Übergabeplätzen in der FTF-Ebene) der Vertikalförderer 20 und wurden von den RBG 22 "chaotisch" auf den Transferplätzen abgestellt. "Chaotisch" bedeutet in diesem Zusammenhang, dass die RBG 22 die Artikel ohne Berücksichtigung irgendeiner Sequenz, d.h. unsequenziert, aus den Regalen 16 ausgelagert und - optional vorsequenziert - auf den Transferplätzen T abgestellt haben. Zumindest der Auslagerungsvorgang erfolgt vorzugsweise wegoptimiert. Dies bedeutet, dass die RBG 22, sofern sie frei, d.h. nicht beladen, sind, alle Artikel des Auftrags beim Passieren eines entsprechenden Regalplatzes R mitnehmen und an den nächsten freien Transferplatz T abgeben können. Somit sind die Artikel chaotisch über die Vertikalförderer 20-1 bis 20-8 verteilt.

Es versteht sich, dass die gezeigte Zuordnung (zwei Artikel pro Vertikalförderer 20) lediglich zum Zwecke einer vereinfachten Erläuterung gewählt ist, um eine zeitliche Komponente auszublenden. Natürlich kann jeder der Vertikalförderer 20 - über die Zeit - mehr als zwei Artikel in die FTF-Ebene 24 transportieren, sobald ein zugeordneter Transferplatz T bzw. Übergabeplatz wieder frei ist. Die Fig. 7A zeigt eine Momentaufnahme, bei der die RBG 22 alle Artikel #1 bis #16 auf den Transferplätzen T abgestellt haben bzw. die Artikel #1 bis #16 bereits in die FTF-Ebene 24 zu Übergabeplätzen verbracht wurden. Die Übergabeplätze liegen in der FTF-Ebene und stellen die Orte bzw. Bereiche dar, wo die Vertikalförderer die Artikel an die FTF 28 übergeben. Dabei kann es sich um Vorrichtungen handeln, die separat zu den Vertikalförderern angeordnet sind. Es kann sich aber auch um die Vertikalförderer 20 selbst handeln, z.B. wenn sich deren LAM in der FTF-Ebene 24 zwecks Übergabe an die FTF 28 befinden.

Am Arbeitsplatz AP der Fig. 7A werden die Artikel in einer aufsteigenden Reihenfolge #1 bis #16 benötigt. Zu diesem Zweck erteilt der Flottenmanager FM (nicht dargestellt) einem ersten FTF 28-1 einen ersten FTF-Fahrauftrag, um den Artikel #1 vom Vertikalförderer 20-2 über einen Fahrweg 40-1 zum Arbeitsplatz AP zu transportieren, der die Segmente 46-1 bis 46-6 entlang der Wegpunkte 44 umfasst. Ein zweites FTF 28-2 bekommt einen FTF-Fahrauftrag zum Transport des Artikels #2 vom Vertikalförderer 20-2 zum Arbeitsplatz AP. Der Fahrweg 40-2 des zweiten FTF 28-2 umfasst ebenfalls die Segmente 46-1 bis 46-6. Der Artikel #3 ist vom dritten Vertikalförderer 20-3 abzuholen. Der FM erteilt einem dritten FTF 28-3 einen dritten FTF-Fahrauftrag, der einen FTF-spezifischen Fahrweg 40-3 definiert, der z.B. die Segmente 46-7 bis 46-12 und 46-5 sowie 46-6 umfasst. Es versteht sich, dass die FTF-Fahraufträge zeitlich so aufeinander abgestimmt sind, dass die Artikel #1 bis #3 in der gewünschten aufsteigenden Reihenfolge beim Arbeitsplatz AP ankommen. Dabei kann die Wahl des Fahrwegs 40 bzw. die Auswahl der entsprechenden Segmente 46 einen Einfluss auf die Reihenfolge haben.

In der Fig. 7A ist ein alternativer Fahrweg 40-3' für das dritte FTF 28-3 gezeigt (siehe Strichlinien). Dieser alternative Fahrweg 40-3' umfasst die Segmente 46-7 bis 46-10, 46-13 und 46-14. Dieser alternative Fahrweg 40-3' ist kürzer als der andere Fahrweg 40-3 für das dritte FTF 28-3. Unter der Voraussetzung, dass die FTF 28 alle mit einer gleichen (konstanten) Geschwindigkeit fahren, kommt das dritte FTF 28-3 bei einer Auswahl des alternativen Fahrwegs 40-3' früher als gemäß seinem ursprünglichen Fahrweg 40-3 am Arbeitsplatz AP an.

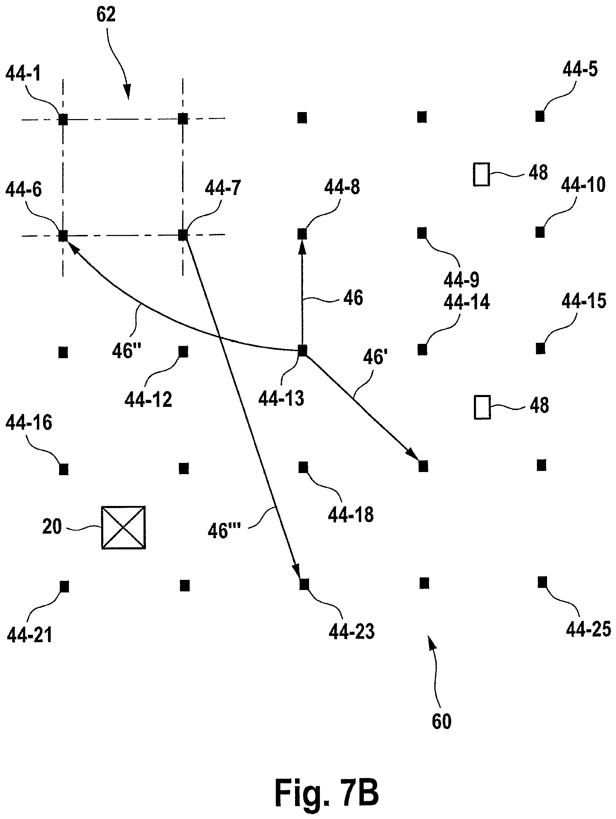

Im Gegensatz zu klassischen Fördertechniken (z.B. Rollenbahnen oder Bandförderer) sind die Fahrwege 40 frei aus den Segmenten 46 zusammensetzbar. Zwar gibt es bei klassischen Fördertechniken möglicherweise ebenfalls mehrere mögliche Strecken von einem ersten zu einem zweiten Punkt innerhalb eines Lagers. Jedoch ist die Anzahl dieser möglichen Strecken begrenzt und verschwindend gering im Vergleich zu der großen, nahezu unendlichen Anzahl von konstruierbaren Streckenverläufen bzw. Fahrwegen 40, die sich aus dem "Baukasten" der Segmente 46 zusammensetzen lassen. Diese Mannigfaltigkeit von möglichen Fahrwegen 40 ist ein Aspekt, der die finale Reihenfolgebildung in der FTF-Ebene 24 möglich macht, insbesondere wenn sehr viele FTF 28 gleichzeitig betrieben werden. Dies wird nachfolgend anhand der Fig. 7B näher beschrieben werden.

Die Fig. 7B zeigt eine exemplarische Topologie 60, die ein Raster 62 aus Gitterpunkten bzw. Wegpunkten 44 aufweist. Die Topologie 60 umfasst ferner Hindernisse, wie z.B. einen Vertikalförderer 20 und Regalsteher 48. Es versteht sich, dass die Topologie 60 die Positionen dieser Elemente aufweist. Die Topologie 60 kann ferner die Abmessungen der Fahrfläche 26 aufweisen.

Die Wegpunkte 44 der Fig. 7B stellen Schnittpunkte eines (imaginären) Gitters dar, das durch Strichlinien in der linken oberen Ecke angedeutet ist. Exemplarisch sind 25 Gitterpunkte 44-1 bis 44-25 gezeigt, die entlang eines regelmäßigen Gitters angeordnet sind. Es versteht sich, dass das Gitter nicht regelmäßig aufgebaut sein muss. Die Wegpunkte 44 können auch chaotisch über die Fläche 26 verteilt sein.

Die Wegpunkte 44 sind über Segmente 46 miteinander verbindbar. Die Segmente 46 sind so definiert, dass die FTF 28 während einer Fahrt entlang den Segmenten 46 nicht mit Hindernissen (z.B. den Regalstehern 48) kollidieren. Über die Segmente 46 ist ein Wegpunkt 44, z.B. der Wegpunkt 44-13, nicht nur mit seinen unmittelbar nächsten Nachbarn (44-8, 44-12, 44-14 und 44-18) verbunden, sondern über diagonale Segmente 46' auch mit weiter entfernten Wegpunkten 44 (44-7, 44-9, 44-17 und 44-19). Die Segmente 46" sind gekrümmt und verbinden den Wegpunkt 44-13 z.B. mit den Wegpunkten 44-6, 44.2, 44-4, 44-10, 44-16, 44-22, 44-24 oder 44-20. Andere Segmente 46 sind beliebig definierbar, z.B. das Segment 46'" entlang einer Geraden vom Wegpunkt 44-7 zum Wegpunkt 44-23. Die Möglichkeiten, Segmente 46 zu definieren, und somit Fahrwege 40 zu bauen, sind unbegrenzt, insbesondere weil der Verlauf der Verbindung, d.h. des Segments 46, zwischen zwei Wegpunkten 46 beliebig definiert werden kann.

Zurückkehrend zur Fig. 7A kann neben der Wahl des Verlaufs des Fahrwegs 40 von einem Start-Vertikalförderer 20 zum Ziel-Arbeitsplatz AP (d.h. neben der Auswahl der Segmente 46) die Reihenfolge ferner durch eine Startzeit, zu welcher das entsprechende FTF 28 losfährt, oder durch eine Geschwindigkeit beeinflusst werden, mit der sich das entsprechende FTF 28 bewegt.

Außerdem können die FTF 28 Sequenzierungsharfen 50 durchfahren (vgl. Fig. 5), die in der Fig. 7A aber nicht gezeigt sind.

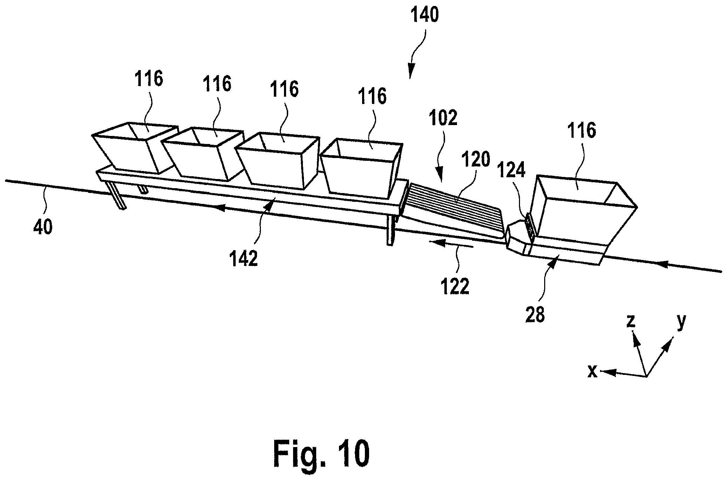

Zusätzlich können in der FTF-Ebene 24 Puffer-Einrichtungen (in Fig. 7A nicht gezeigt) vorgesehen sein, die nachfolgend unter Bezugnahme auf Fig. 10 noch näher beschrieben werden.

Außerdem versteht es sich, dass im Beispiel der Fig. 7A mehr oder weniger als drei FTF 28-1 bis 28-3 eingesetzt werden können, um den Kommissionierauftrag zu erledigen, der die Artikel #1 bis #16 umfasst. Der Verlauf der Fahrwege 40 der FTF 28 ist aufgrund der Barrierefreiheit, wenn man von den Vertikalförderern 20 und den Regalstehern 48 absieht, frei wählbar.

Als weitere Sequenzierungsalternative können die FTF 28 Überholmanöver ausführen, indem die FTF 28 z.B. eine Schleife anstatt geradeaus fahren. Während das eine FTF 28 eine Schleife fährt, kann ein anderes FTF 28 auf der Geradeausspur überholen. Natürlich ist dieser Vorgang auch umgekehrt möglich, so dass das FTF 28 auf der Schleife überholt, während das andere FTF 28 geradeaus fährt. In diesem Fall kann es sinnvoll sein, zusätzlich die Fahrgeschwindigkeiten anzupassen.

Nachfolgend wird eine in den Figuren nicht näher veranschaulichte Kommunikation zwischen dem Materialflussrechner MFR und dem Flottenmanager FM in Zusammenhang mit einem Beladevorgang bei einer Beladestation 130 beschrieben.

Ein beliebiges Stückgut 116, z.B. mit der #1001, ist zur Beladung bereit. Das Stückgut #1001 steht z.B. unmittelbar vor dem Trennförderer 102. Bevor eine Übergabe an ein FTF 28 initiiert werden kann, muss ein neues FTF 28 angefordert werden, um an einem entsprechenden Belade-Wegpunkt 44 anzuhalten bzw. diesen synchronisiert zu durchfahren. Dazu sendet der Materialflussrechner MFR einen Fahrauftrag an den Flottenmanager FM, der die Information enthält, dass das Stückgut #1001 z.B. am Wegpunkt #13 zur Abholung bereitsteht. Der Flottenmanager FM empfängt diesen Fahrauftrag und prüft, ob bereits eine entsprechende Auftrags-ID im System existiert. Falls nicht, wird ein neues FTF 28 mit der Bezeichnung z.B. W42 ausgewählt, um den Wegpunkt #13 zu fahren. Der Fahrauftrag wird gespeichert, die Fahrauftrags-ID und eine geeignete Route werden an das ausgewählte FTF 28 übermittelt.

Das ausgewählte FTF 28 fährt zu dem gewünschten Wegpunkt Nr. 13 und sendet ein entsprechendes Signal an den Flottenmanager FM. Der Flottenmanager FM findet einen Auftrag für diese Auftrags-ID und kann nun den Auftrag abschließen.

Der Materialflussrechner MFR startet dann den Transfer des Stückguts Nr. #1001. Dies bedeutet, dass die Beladung des FTF 28 mit der Bezeichnung W42 initiiert werden kann. Zu diesem Zweck wird ein Signal an eine weitere Steuerung ausgegeben, die für die Fördertechnik verantwortlich ist, um das Stückgut #1001 von der Fördertechnik auf den Trennförderer 102 und vom Trennförderer 102 auf das FTF 28 zu bewegen. Anschließend wird das FTF 28 an einen gewünschten Zielort verfahren, um das Stückgut #1001 aufnehmen.

Auf ähnliche Weise läuft ein Entladevorgang ab.

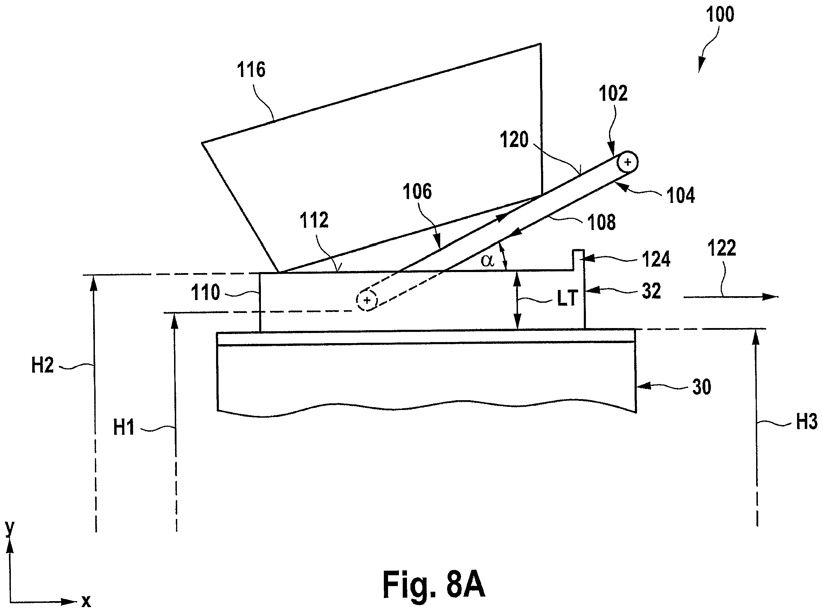

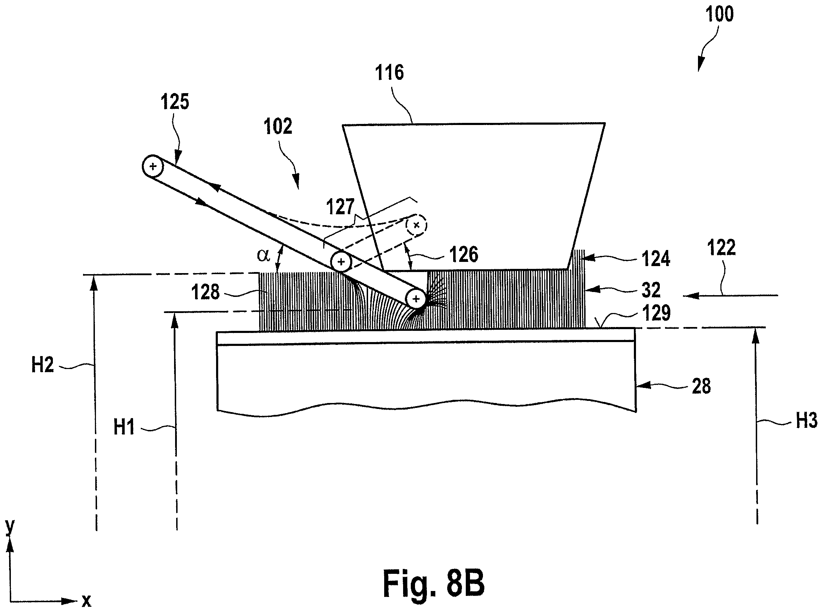

Bezugnehmend auf die Figuren 8 sowie 2A und 2B werden nachfolgend Systeme 100 zum Be- und Entladen von Stückgütern 116 auf ein und von einem FTF 28 beschrieben.

Wie in Fig. 8A gezeigt, weist ein erstes System 100 mindestens eine Aufnahmevorrichtung bzw. Aufnahme 32, wie sie bereits in der Fig. 2 gezeigt ist, und einen Trennförderer 102 auf, der nachfolgend noch näher beschrieben wird.

Der Trennförderer 102 weist eine Vielzahl von angetriebenen Einzelförderern 104 auf, die quer (d.h. in der Z-Richtung) nebeneinander angeordnet und quer zueinander beabstandet sind. Die Einzelförderer 104 erstrecken sich im Wesentlichen geradlinig parallel zur Längsrichtung X. Die Einzelförderer 104 können z.B. durch Riemenförderer 106 mit jeweils einem endlos umlaufenden Trum 108 oder als (hier nicht gezeigte) Röllchenförderer ausgebildet sein. Die Einzelförderer 104 sind angetrieben, wobei ein entsprechender Antrieb und ein Maschinengestellt der Einzelförderer 104 hier nicht gezeigt sind.

Der Trennförderer 102 kämmt mit einer Vielzahl von Stützlamelle 110, die nachfolgend auch kurz als Lamellen 110 bezeichnet werden. Wie in der Fig. 2 gezeigt, sind die Lamellen 110 vorzugsweise alle gleich ausgebildet und erstrecken sich geradlinig entlang der Längsrichtung X. Die Lamellen 110 bilden gemeinsam die Aufnahme 32. In der Fig. 2 umfasst die Aufnahme 32 z.B. acht, in der Seitenansicht L-förmige, Lamellen 110-1 bis 110-8. Die Lamellen 110-1 bis 110-8 erstrecken parallel zur Längsrichtung X und sind in der Querrichtung Z gleich zueinander beabstandet, um Lücken 118 zwischen sich zu definieren. In der Fig. 2 sind sieben Lücken 118-1 bis 118-7 gezeigt. Es versteht sich, dass der Trennförderer 102 (Fig. 8) in diesem Fall vorzugsweise sieben Einzelförderer 104 aufweist, die so angeordnet sind, dass sie mit den Lücken 118-1 bis 118-7 berührungslos kämmen, wenn das FTF 28 entlang der Längsrichtung X (siehe Fahrrichtung 122) durch den Trennförderer 102 fährt, wie es exemplarisch in der Fig. 8 gezeigt ist.

Die Lamellen 110 bzw. deren Oberseiten definieren eine im Wesentlichen plane Transportfläche 112, wenn man von fingerartigen, optionalen Vorsprüngen 124 absieht, die an einem stromabwärts gelegenen Ende der Lamellen 110 als Anschlag für die Stückgüter 116 vorgesehen sein können. Die Transportfläche 112 ist in der Fig. 2B mit einer Hilfslinie 114 umrandet dargestellt. In einem beladenen Zustand des FTF 28 sitzt das Stückgut 116 auf der Oberseite der Lamellen 110 flächig auf. Eine vordere Kante des Stückguts 116 stößt dabei vorzugsweise an die Vorsprünge 124 an, die senkrecht aus der Transportfläche 112 vorstehen. Die gezeigten Vorsprünge sind statisch, weil sie einstückig mit den Lamellen 110 ausgebildet sind. Alternativ können aktive Vorsprünge 124 vorgesehen sein, die ein- und ausfahrbar sind. Die Vorsprünge können ergänzend auch an einem stromaufwärts gelegenen Ende der Lamellen 110 vorgesehen sein. Außerdem können die seitlich in Z außen vorgesehen Lamellen 110 leicht erhöht gegenüber den mittleren Lamellen ausgebildet sein, um einen seitlichen Rand in der Transportfläche 112 auszubilden, der ein seitliches Abrutschen von geladenen Stückgütern 116 während einer Fahrt des FTF 28 verhindert. Die Transportfläche 112 bildet dann ein "Nest", in welchem die Stückgüter 116 insbesondere während einer Fahrt des FTF 28 sicher sitzen.

Die Lücken 118 weisen vorzugsweise eine konstante Tiefe LT (siehe Fig. 8) über ihre Länge in der Längsrichtung X auf, um Kollisionen zwischen den Einzelförderern 104 im eingetauchten Zustand und dem FTF 28 zu vermeiden. Ein unteres Ende des Trennförderers 102 ist in einer Höhe H1 angeordnet, die zwischen einer Höhe H2 der Transportfläche 112 und einer Höhe H3 liegt, die durch eine Oberseite des Basisfahrzeugs 30 bestimmt ist. Die Tiefe LT der Lücken 118 entspricht also einer Differenz der Höhen H2 und H3. Eine Eintauchtiefe des Trennförderers 102 in die Aufnahme 32 entspricht einer Differenz der Höhen H2 und H1.

Fig. 8A und 8B zeigen jeweils einen Entladevorgang, bei dem das Stückgut 116 aus der Aufnahme 32 mittels des Trennförderers 102 ausgehoben wird. Dazu wird der Trennförderer 102 mit einer Fördergeschwindigkeit betrieben, die im Wesentlichen einer Fahrgeschwindigkeit des FTF 28 entspricht, das vorzugsweise kontinuierlich durch den Trennförderer 102 hindurchfährt. Beim Entladen kann die Fördergeschwindigkeit leicht höher als die Fahrgeschwindigkeit eingestellt sein, damit das Stückgut 116 auf den Trennförderer 102 aufgezogen wird. Beim Beladen kann die Fahrgeschwindigkeit leicht höher sein, um das Stückgut 116 auf das FTF 28 zu ziehen. Durch die leicht höhere Geschwindigkeit (z.B. 5% größer) wird der Transfervorgang drücken bzw. ziehend unterstützt. Zurückkehrend zum Entladen wird das Trum 108 der Einzelförderer 104 in der Fig. 8A im Uhrzeigersinn bewegt, wenn das FTF 28 von links nach rechts in der Fig. 8A durch den Trennförderer 102 fährt. Die Förderfläche 120 schließt mit der Transportfläche 112 eine spitzen Winkel α ein, der so gewählt ist, dass der Trennförderer 102 für das Stückgut 116 kein Hindernis beim Entladen darstellt, welches das Stückgut 116 nach links von der Aufnahme 32 abschieben würde. Der Trennförderer 102 stellt eine Rampe dar.

Es versteht sich, dass der Trennförderer 102 auch horizontal orientiert sein kann, wobei das FTF 28 dann auf einer Fläche fährt, die im Bereich des Trennförderers 102 mit dem Winkel α gegenüber der Horizontalen abfällt. Der Trennförderer 102 selbst kann leicht abfallenden gegenüber der Horizontalen geneigt sein. Dies ist insbesondere von Vorteil, wenn der Trennförderer 102 als (antriebsloser) Röllchenförderer ausgebildet ist, weil die FTF 28 dann die Stückgüter 116 durch bloßes Unterfahren abgeben können, wobei die abgegebenen Stückgüter 116 nach der Abgabe allein aufgrund von Schwerkraft zumindest noch ein Stück weiter transportiert werden.

In der Fig. 8A fährt das FTF 28 beim Entladen von links nach rechts. Beim Beladen fährt das FTF von rechts nach links, wobei der bzw. die Vorsprünge 124 dann wiederum am stromabwärts gelegenen Ende des FTF, d.h. in der Fig. 8A rechts, angeordnet sind. Der Trennförderer 102 wird beim Beladen in einer umgekehrten Richtung betrieben, d.h. im Gegenuhrzeigersinn. Wiederum ist die Fördergeschwindigkeit des Trennförderers 102 im Wesentlichen genauso groß wie die Fahrgeschwindigkeit des FTF 28. Der in der Fig. 8A nicht gezeigte Flottenmanager FM (siehe Fig. 1) synchronisiert dazu den Trennförderer 102 mit dem durch den Trennförderer 102 hindurchfahrenden FTF 28, so dass der Trennförderer 102 zum Zeitpunkt der Übergabe des Stückguts 116 auf die Aufnahme 32 in Betrieb ist. Der Flottenmanager FM empfängt von FTF 28 ein Signal, sobald das FTF 28 den Wegpunkt 44 erfasst hat, der dem System 100 zugeordnet ist. Natürlich können die Einzelförderer zumindest beim Entladen auch kontinuierlich betrieben werden, so dass eine Synchronisation entfällt. Die Synchronisation kann auch beim Beladen entfallen, wenn das FTF 28 am Übergabepunkt anhält, also nicht kontinuierlich unter dem Trennförderer 102 hindurchfährt.

Fig. 8B zeigt ein zweites System 100 zum Entladen eines Stückguts 116 von einem FTF 28. Das System 100 der Fig. 8B unterscheidet sich vom System der Fig. 8A im Wesentlichen in der Ausführung des Trennförderers 102 und in der Ausführung der Aufnahme 32. Der Trennförderer 102 ist als ein einziger Bandförderer 125 ausgeführt, der in Z ungefähr so breit wie die Aufnahme 32 ist. An seinem unteren Endbereich 126 ist der Bandförderer 125 schenkbar ausgebildet, wie es durch einen Pfeil 126 angedeutet ist. Ein unterer Abschnitt 127 des Bandförderers 125 ist nach oben schwenkbar, um Sicherheitsanforderungen zu entsprechen, damit sich Menschen nicht verletzen können. Das Trum des Bandförderers 125 wird in der Fig. 8B beim Entladen des Stückguts 116 gegen den Uhrzeigersinn bewegt.

Die Aufnahme 32 der Fig. 8B ist vorzugsweise genau gleich wie die Aufnahme 32 der Fig. 8A dimensioniert. Jedoch weist die Aufnahme 32 der Fig. 8B flexible Bürsten 128 anstatt der Stützlamellen 110 auf. Die Bürsten 128 sind so hart, dass sie das Stückgüter 116 in einem Mindestabstand zur Oberseite 129 des FTF 28 halten können. Die Bürsten 128 sind elastisch verformbar, dass sie unter dem Trennförderer 102 wegtauchen können. Die Bürsten 128 sind vorzugsweise teppichartig dicht angeordnet, können aber alternativ auch wie die Stützlamellen in der Fig. 8A auf dem FTF 28 angeordnet sein.

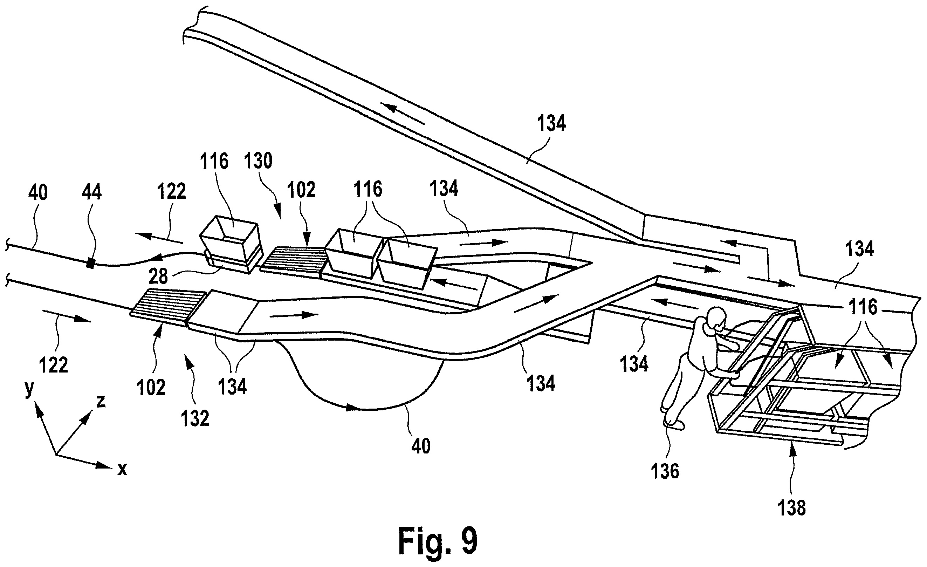

Fig. 9 zeigt das System 100 zum Be- und Entladen von Stückgütern 116 in einem Anwendungsbeispiel. Die Fig. 9 zeigt perspektivisch die Anbindung eines FTS über eine Beladestation 130 und über eine Entladestation 132 an eine konventionelle Fördertechnik , insbesondere an klassische Stetigförderer 134, wie z.B. eine Rollenbahn oder einen Bandförderer. Der Fahrweg 40 verläuft parallel unter dem Trennförderer 102 hindurch. Bei der Entladestation 132 kämmt der entsprechende Trennförderer 102 die Stückgüter aus und fördert sie auf den sich daran anschließenden Stetigförderer 134. Bei der Beladestation 130 leitet der entsprechende Trennförderer 102 die Stückgüter 116 über seine kämmenden Einzelförderer 104 auf die Aufnahme 32 eines passierenden FTF 28. Die Beladestation 130 wird über eine weitere Fördertechnik 134 mit den Stückgütern 116 versorgt, wie es durch Pfeile angedeutet ist. Die Fördertechnik 134 zur Beladestation 130 liegt tiefer als die Fördertechnik 134, die von der Entladestation 132 weg führt.

Die Fig. 9 zeigt also eine Anbindung der FTF 28, wie sie bspw. in der FTF-Ebene 24 (Fig. 4 und 5) eingesetzt werden, an eine konventionelle Fördertechnik 134. Ferner ist in der Fig. 9 ein Kommissionierer 136 gezeigt, der einen Handkommissionierwagen 138 schiebt. Die Erfindung ist also jederzeit in existierende Lager- und Kommissioniersysteme integrierbar und an konventionelle Fördertechniken anbindbar.

Fig. 10 zeigt eine perspektivische Ansicht einer weiteren Anwendung des Systems 100 zum Be- und Entladen von Stückgütern 116 bei einer Pufferstation 140, die z.B. in einer FTF-Ebene 24 eingesetzt werden kann.

An den Trennförderer 102 der Fig. 10 schließt sich eine, hier bidirektional, angetriebene Puffer-Fördertechnik 142 (FILO-Prinzip) mit vier Pufferplätzen für vier Stückgüter 116 an. Im Fall eines unidirektional angetrieben Fördertechnik 142 könnte am anderen Ende ein weiterer Trennförderer 102 (nicht gezeigt in Fig. 10) zum Beladen der FTF 28 vorgesehen sein (FIFO-Prinzip). In der Fig. 10 folgt das FTF 28 dem Fahrweg 40, der parallel zu den Einzelförderern 104 des Trennförderers 102 orientiert ist. Das FTF 28 fährt in der Fig. 10 von rechts nach links um Stückgüter 116 abzugeben.

Sobald ein abgegebenes Stückgut 116 auf den Trennförderer 102 steht, kann es in Richtung der Puffer-Fördertechnik 142 weiter gefördert werden. Die Puffer-Fördertechnik 142 kann segmentartig ausgebildet sein, um die Stückgüter 116 einzeln von einem Pufferplatz zu einem anderen Pufferplatz zu bewegen.

Sobald die Pufferstation 140, die hier maximal fünf Stückgüter 116 aufnehmen kann, voll ist, kann sie die gepufferten Stückgüter 116 wieder an leere FTF 28 abgeben. Zu diesem Zweck wird sowohl die Puffer-Fördertechnik 142 als auch der Trennförderer 102 in einer umgekehrten Richtung betrieben. Die (leeren) FTF 28, die in der Fig. 10 nicht gezeigt sind, fahren dann von links nach rechts entlang des Fahrwegs 40 kämmend durch den Trennförderer 102 hindurch.

Der Einsatz der Pufferstation 140 in einer FTF-Ebene 24 ist immer dann sinnvoll, wenn z.B. mehr Stückgüter 116 in der FTF-Ebene 24 sequenziert werden müssen, als FTF 28 vorhanden sind. In diesem Fall können die FTF 28 die zu sequenzierenden Stückgüter 116 von den Vertikalförderern 20 abholen und vorübergehend an eine (oder mehrere) Pufferstationen 140 abgeben, um sie von dort bedarfsabhängig wieder abzuholen.

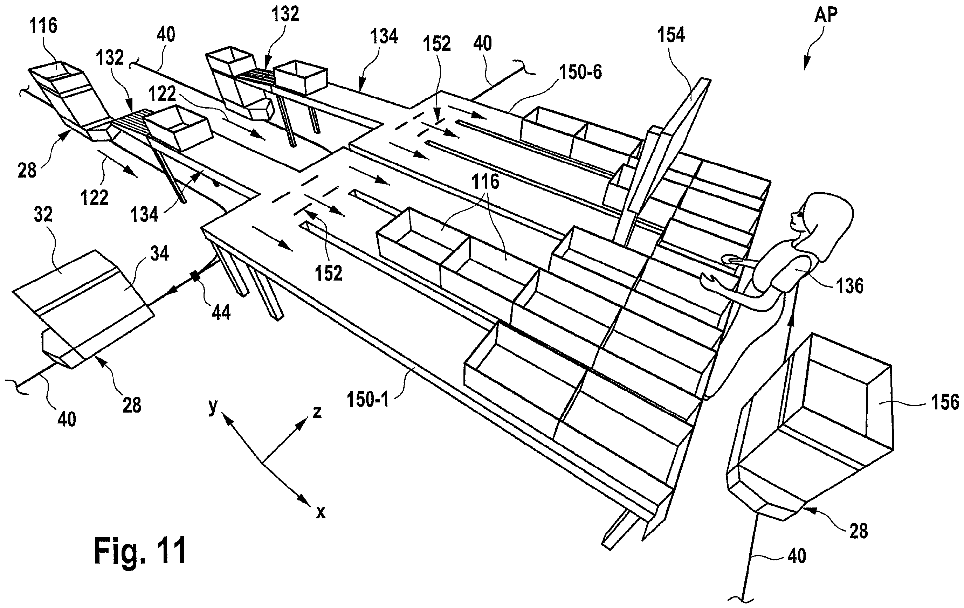

Fig. 11 zeigt eine perspektivische Ansicht einer weiteren Ausführungsform eines Arbeitsplatzes AP, wie er z.B. in der FTF-Ebene 24 der Fig. 4 eingesetzt werden kann.

Der Arbeitsplatz AP der Fig. 11 weist zwei Entladestationen 132 auf, um die Stückgüter 116 (z.B. Lagerbehälter) in Richtung eines Kommissionierers 136 über angetriebene Pufferbahnen 150 zu verteilen. In der Fig. 11 sind exemplarisch sechs Pufferbahnen 150-1 bis 150-6 gezeigt, die parallel zueinander und entlang der Längsrichtung X angeordnet sind. Die zweite und fünfte Pufferbahn 150-2 und 150-5 ist ferner mit jeweils einer Umsetzeinrichtung 152 versehen, um die Stückgüter 116 quer in die restlichen Pufferbahnen 150-1, 150-3, 150-4 und 150-6 zu verteilen. Die Umsetzeinrichtungen 152 können z.B. durch heb- und senkbare Riemenförderer realisiert sein.

Der Arbeitsplatz AP der Fig. 11 kann ferner eine Anzeige 154 aufweisen. Der Kommissionierer 136 bekommt über die Anzeige 154 angezeigt, wie viele Artikel er aus welchem Behälter in ein Zielbehältnis 156 (z.B. Auftragsbehälter) abgeben muss. Das Zielbehältnis 156 kann ebenfalls mittels eines FTF 28 entlang eines Fahrwegs 40 von und zum Kommissionierer 136 bewegt werden. Die FTF 28 können also sowohl zum Einlagern als auch zum Auslagern der Artikel und zum Kommissionieren bzw. zum Transportieren von Lager- und Auftragsbehältnissen eingesetzt werden.

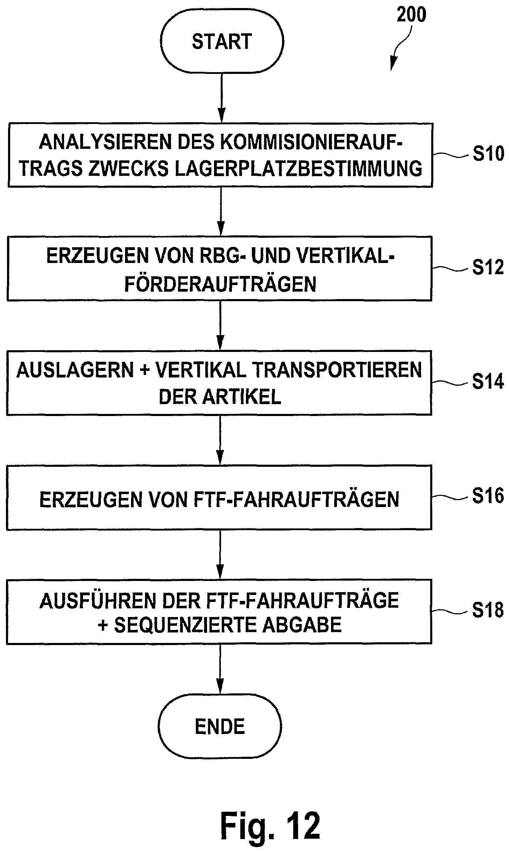

Fig. 12 zeigt ein Flussdiagramm, das verallgemeinert das oben beschriebene Verfahren zum chaotischen Auslagern und sequenzierten Bereitstellen der Artikel an dem Arbeitsplatz AP erläutert.

In einem ersten Schritt S10 werden die Kommissionieraufträge bzw. der Kommissionierauftrag analysiert, um die Regalplätze R zu bestimmen, in welchen die benötigten Artikel gelagert sind. In einem Schritt S12 werden RBG- und Vertikalförderaufträge erzeugt und an die RBG 22 und die Vertikalförderer 20 übertragen. In einem Schritt S14 werden die benötigten Artikel von den RBG 22 ausgelagert und von den Vertikalförderern 20 vertikal in die FTF-Ebene 24 transportiert. In einem Schritt S16 werden FTF-spezifische Fahraufträge bzw. FTF-Fahraufträge erzeugt und an die betroffenen bzw. ausgewählten FTF 28 übertragen. In einem Schritt S18 werden die FTF-Fahraufträge von den FTF 28 ausgeführt, um die Artikel in der gewünschten absoluten Reihenfolge an die Arbeitsplätze AP abzugeben.

Bisher wurde im Wesentlichen eine Auslagerung mit finaler sequenzierter Übergabe an eine Zielstelle, wie z.B. einen der Arbeitsplätze AP, zwecks Kommissionierung beschrieben. Der Materialfluss 12 erfolgte dabei aus der Regalanordnung 12 über die Vertikalförderer 20, die in Bezug auf die FTF-Fahraufträge bzw. FTF-Fahrwege Startstellen in der FTF-Ebene 24 darstellten, an die Arbeitsplätze AP, die in Bezug auf die FTF-Fahraufträge bzw. FTF-Fahrwege 40 die Zielstellen darstellten.

Es versteht sich von selbst, dass die Erfindung auch beim Einlagern ihre Vorteile hat. Der Materialfluss 12 ist beim Einlagern umgekehrt gerichtet, d.h. die dann einlagernden Vertikalförderer 20 sind dann Zielstellen für die FTF 28, die aus dem WE (siehe Fig. 1) kommen, und (nicht in der Fig. 1 dargestellte) Vereinzelungsstationen, wo z.B. sortenreine Wareneingangspaletten einzeln auf die FTF 28 vereinzelt werden, sind dann Startstellen für die FTF 28 in der FTF-Ebene 24. Die FTF-Ebene 24 stellt dann hinsichtlich einer Materialflussplanung eine Stufe beim Prozess der Artikelverteilung dar. Bei der Artikelverteilung werden die WE-Artikel materialflusstechnisch über die Regalanordnung 14 verteilt (SKU-Spread), so dass später beim Auslagern alle Artikel eines beliebigen Kommssionierauftrags aus den Regalplätzen R von vorzugsweise einer einzigen Regalgasse 18 auslagerbar sind. Auch ein Lagerfüllgrad, der im Idealfall in jedem Bereich der Regalanordnung 14 gleich sein sollte, kann bei der Planung des Wareneinlagerungsprozesses berücksichtigt werden.

Hier spielt die FTF-Ebene 24 eine entscheidende Rolle, weil, im Gegensatz zur klassischen Vorzone mit Stetigförderern, jeder Regalplatz R über einen kürzesten Weg erreichbar ist. Die FTF 28 können sich frei unterhalb, oberhalb oder in der Regalanordnung 14 entlang von Wareneingangsartikel-spezifisch frei wählbaren, vorzugsweise wegoptimierten, Fahrwegen 40 bewegen. Die FTF 28 fahren solche Vertikalförderer 20 an, die möglichst nah zu einem gewünschten Einlagerungsregalplatz R liegen. Bei einer mehrfachtiefen Handhabung spielt auch die Sequenz wieder eine Rolle, so dass die FTF-Ebene 24 auch beim Einlagern sequenzierend arbeitet.

### Bezugszeichenliste:

- 10: Lager- und Kommissioniersystem
- WE: Wareneingang
- WA: Warenausgang
- 12: Materialfluss
- 14: Regalanordnung
- 16: Regal
- 18: (Regal-)Gasse
- 20: Vertikalförderer
- T: Transferplätze
- R: Regalplätze
- 22: Regalbediengerät/RBG
- AP: Arbeitsplatz
- 24: FTF-Ebene
- 26: Fahr-/Aktionsfläche
- 28: Fahrerloses Transportfahrzeug (FTF)/Shuttle
- MFR: Materialflussrechner
- LVR: Lagerverwaltungsrechner
- FM: Flottenmanager
- 30: (Basis-)Fahrzeug
- 32: Artikelaufnahme
- 34: Aufsatz
- 36: (proprietäres) Kommunikationsprotokoll
- 40: Fahrweg
- 42: Liftanordnung
- 44: Wegpunkt
- 46: Segment
- 48: Regalsteher
- 50: Sequenzierungsharfe
- 52: Liftgruppe
- 60: Topologie
- 62: Raster
- 100: System zu Be-/Entladen
- 102: Trennförderer
- 104: Einzelförderer
- 106: Riemenförderer
- 108: Trum
- 110: (Stütz-)Lamelle
- 112: Transportfläche
- 114: Hilfslinie
- 116: Stückgut
- 118: Lücke
- LT: Mindesttiefe von 118 = H2 - H3/Lückentiefe
- H1-H3: Höhen
Eindringtiefe = H2 - H1
- α: Winkel zwischen 102 und 112
- 120: Förderfläche von 102
- 122: Fahrrichtung von 28
- 124: fingerartiger Vorsprung/Anschlag
- 125: Bandförderer
- 126: Pfeil
- 127: unterer Abschnitt von 125
- 128: Bürsten
- 129: Oberseite von 28
- 130: Beladestation
- 132: Entladestation
- 134: Stetigförderer
- 136: Kommissionierer
- 138: Handkommissionierwagen
- 140: Pufferstation
- 142: Puffer-Fördertechnik
- 150: Pufferbahnen
- 152: Umsetzeinrichtung
- 154: Anzeige
- 156: Zielbehältnis

## Patentansprüche

1. Lager- und Kommissioniersystem (10) mit:
einer statisch angeordneten Regalanordnung (14), die Vielzahl von Regalen (16) und eine Vielzahl von statisch angeordneten Vertikalförderern (20) aufweist, wobei die Regale (16) jeweils eine Vielzahl von übereinander und nebeneinander angeordneten Regalplätzen (R) aufweisen, in welche Lagergüter ein- und auslagerbar sind, wobei die Regale (16) mindestens eine Regalgasse (18) zwischen sich definieren, wobei zur materialflusstechnischen Anbindung der Regalgassen (18) jeweils mehrere der Vertikalförderer (20) entweder seitlich an Längsseiten der entsprechenden Regale (16) angrenzen oder innerhalb der entsprechenden Regale (16) angeordnet sind und wobei die Vertikalförderer (20) die Lagergüter im Wesentlichen vertikal transportieren; und
einer Vielzahl von Regalbediengeräten (22), die in den Regalgassen (18), vorzugsweise schienengeführt, verfahrbar sind, wobei die Lagergüter im Wesentlichen horizontal entlang den Regalgassen (18) zwischen den Regalplätzen (R) und Transferplätzen (T) transportiert, die in den Regalen (16) als Pufferplätze gegenüberliegend zu den Vertikalförderern (20) angeordnet sind;
wobei das Lager- und Kommissioniersystem **gekennzeichnet ist durch**:
mindestens eine Flotte von autonom verfahrbaren, fahrerlosen Transportfahrzeugen, FTF, (28);
eine FTF-Ebene (24), die im Wesentlichen barrierefrei, insbesondere frei von Regalplätzen (R), ist und die sich unter der, über der oder **durch** die Regalanordnung (14) erstreckt, wobei die FTF-Ebene (24) fördertechnisch über die Vertikalförderer (20), die vertikal bis in die FTF-Ebene (24) reichen, an die Regalanordnung (14) gekoppelt ist, wobei die FTF-Ebene (24) eine Fahrfläche (26) aufweist, die eine Topologie aus Wegpunkten (44) und Segmenten (46) aufweist, entlang denen sich die FTF (28) geführt bewegen, wobei sich jedes der Segmente (46) von einem der Wegpunkte (44) zu einem anderen benachbarten Wegpunkt (44) erstreckt;
mindestens eine Zielstelle, vorzugsweise einem Arbeitsplatz (AP), die hinsichtlich eines Materialflusses (12) über die FTF (28) mit den Vertikalförderern (20) verbunden ist; und
einen Flottenmanager (FM), der Zugriff auf die Topologie hat und der zum Erzeugen und Ausgeben von Navigationsinformationen umfassenden, individuellen Fahraufträgen für die FTF (28) eingerichtet ist, um die von den Vertikalförderern (20) noch nicht in einer absoluten Reihenfolge in die FTF-Ebene (24) transportierten Lagergüter entlang von FTF-spezifisch erzeugten, individuellen Fahrwegen (40) von den Vertikalförderern (20) zu der mindestens einen Zielstelle zu transportieren und in der absoluten Reihenfolge an die mindestens eine Zielstelle zu übergeben oder umgekehrt;
wobei die Regalbediengeräte (22) die Lagergüter chaotisch auslagern.

2. System nach Anspruch 1, wobei sich die FTF-Ebene (24) zumindest über eine Fläche (26) erstreckt, die die Vertikalförderer (20) einschließt.

3. System nach Anspruch 2, wobei sich die FTF-Ebene (24) zumindest über eine Fläche (26) erstreckt, die zusätzlich die Regale (14) und die Regalgassen (18) der Regalanordnung (14) im Wesentlichen vollständig einschließt.

4. System nach einem der Ansprüche 1 bis 3, wobei jeder der individuellen Fahraufträge einen von mehreren möglichen Fahrwegen (40) zwischen einem der Vertikalförderer (20) und der mindestens einen Zielstelle für das entsprechende FTF (28) definiert sowie Sequenz- und Überholinformationen aufweist, damit solche der FTF (28), die die Lagergüter zwischen den Vertikalförderern (20) und der einen Zielstelle transportieren, einander überholen können und die Lagergüter in der absoluten Reihenfolge übergeben.

5. System nach einem der Ansprüche 1 bis 4, wobei jeder der Vertikalförderer (20) an mehrere Transferplätze (T) grenzt, die jeweils vorzugsweise regal-integriert ausgebildet sind.

6. System nach einem der Ansprüche 1 bis 5, wobei ferner ein Materialflussrechner (MFR) vorgesehen ist, der zum Erzeugen von wegoptimierten Transportaufträgen für die Regalbediengeräte (22) eingerichtet ist.

7. System nach einem der Ansprüche 1 bis 6, wobei jedes der FTF (28) lastaufnahmemittellos mit einer passiven Aufnahme (34) ausgebildet ist.

8. System nach einem der Ansprüche 1 bis 7, wobei die Fahrfläche (26) ferner mindestens eine Sequenzierungsharfe (50) aufweist.

9. System nach einem der Ansprüche 1 bis 8, wobei die Regalbediengeräte (22) die Artikel wegoptimiert auslagern.

10. System nach Anspruch 9, wobei auch die Vertikalförderer die abgeholten Artikel wegoptimiert in die FTF-Ebene transportieren.

11. System nach einem der Ansprüche 1 bis 10, das eine Vielzahl von Zielstellen aufweist, wobei jede der Zielstellen mittels der FTF (28) hinsichtlich eines Materialflusses über mehrere mögliche, frei zusammensetzbare Fahrwege (40) an jeden der Vertikalförderer (20) koppelbar ist.

12. System nach einem der Ansprüche 1 bis 11, wobei die Topologie ferner Ortsangaben zu den Vertikalförderern (20) und zu anderen Fahrhindernissen in der Fahrfläche (26) aufweist.

13. Verfahren zum sequenzierten Versorgen einer Zielstelle (AP) mit einer Vielzahl von Artikeln, die einen Kommissionierauftrag repräsentieren und die chaotisch aus Regalen (16) einer statisch angeordneten Regalanordnung (14) mittels Regalbediengeräten (22), die in Regalgassen (18) zwischen gegenüberliegenden Regalen (16) verfahrbar sind, ausgelagert werden und die mittels einer Vielzahl von statisch angeordneten Vertikalförderern (20) vertikal in eine FTF-Ebene (24) transportiert werden, die eine Vielzahl von autonom verfahrbaren, fahrerlosen Förderfahrzeugen, FTF, (28) und eine Fahrfläche (26) aufweist, um mittels den FTF (28) auf der Fahrfläche (26), die eine Topologie aus Wegpunkten (44) und Segmenten (46) aufweist, entlang denen die FTF (28) geführt verfahrbar sind, in einer absoluten Reihenfolge an der Zielstelle (AP) bereitgestellt zu werden, wobei sich jedes der Segmente (46) von einem der Wegpunkte (44) zu einem anderen benachbarten Wegpunkt (44) erstreckt und wobei zusammenhängende Segmente (46) einen Fahrweg (40) definieren, mit den folgenden Schritten:
Bestimmen einer Menge von Regalplätzen (R), in welchen gemäß dem Kommissionierauftrag auszulagernde Artikel gelagert sind;
Erzeugen von RBG-Transportaufträgen für die Regalbediengeräte (22) und Übertragen der RBG-Transportaufträge an die entsprechenden Regalbediengeräte (22);
Auslagern und Abgeben der Artikel mittels der Regalbediengeräte (22) gemäß den RBG-Transportaufträgen;
Erzeugen von Vertikalförderer-Transportaufträgen für die Vertikalförderer (20) und Übertragen der entsprechenden Vertikalförderer-Transportaufträge an die entsprechenden Vertikalförderer (20);
vertikales Transportieren der Artikel in die FTF-Ebene (24) mittels der Vertikalförderer (20);
Erzeugen von Navigationsinformationen umfassenden, individuellen Fahraufträgen für die FTF (28) und Übertragen der Fahraufträge an die entsprechenden FTF (28), um die von den Vertikalförderern (20) noch nicht in der absoluten Reihenfolge in die FTF-Ebene (24) transportierten Artikel entlang von FTF-spezifisch erzeugten, individuellen Fahrwegen (40) von den Vertikalförderern (20) zu der Zielstelle (AP) zu transportieren und in der absoluten Reihenfolge an die Zielstelle (AP) zu übergeben;
Ausführen der Fahraufträge durch die entsprechenden FTF (28), wobei sich die entsprechenden FTF (28) entlang der FTF-spezifisch erzeugten, individuellen Fahrwege (40) von den entsprechenden Vertikalförderern (20) zu der Zielstelle (AP) bewegen und die Artikel in der absoluten Reihenfolge an die Zielstelle (AP) übergeben.

14. Verfahren nach Anspruch 13, wobei die Auslagerung der Artikel durch die Regalbediengeräte (22) wegoptimiert erfolgt.

15. Verfahren nach Anspruch 13 oder 14, wobei sich die FTF-Ebene (24) zumindest über eine Fläche (26) erstreckt, die die Vertikalförderer (20) einschließt und die vorzugsweise zusätzlich die Regale (14) und die Regalgassen (18) der Regalanordnung (14) im Wesentlichen vollständig einschließt.

## Claims

1. A storage and order-picking system (10) comprising:
a statically arranged rack arrangement (14) comprising a plurality of racks (16) and a plurality of statically arranged vertical conveyors (20), wherein the racks (16) respectively comprise a plurality of rack locations (R) being arranged on top of each other and next to each other, in and from which rack locations (R) the storing goods are storable and retrievable, wherein the racks (16) define at least one rack aisle (18) between each other, wherein, for linking the rack aisles (18) in terms of material flow, respectively several ones of the vertical conveyors (20) are arranged either laterally adjacent to longitudinal sides of the corresponding racks (16) or within the corresponding racks (16), and wherein the vertical conveyors (20) transport the storage goods substantially vertically; and
a plurality of storage and retrieval devices (22) which can travel, preferably in a rail-guided manner, in the rack aisles (18), wherein the storage goods are substantially transported horizontally along the rack aisles (18) between the rack locations (R) and transfer locations (T) which are arranged in the racks (16) oppositely to the vertical conveyors (20) as buffering locations;
wherein the storage and order-picking system (10) is **characterized by**:
at least one fleat of autonomous movable driverless transport vehicles, FTF, (28);
an FTF plane (24), which is substantially free of barriers, in particular free of rack locations (R), and which extends horizontally beneath, above, or through the rack arrangement (14), wherein the FTF plane (24) is coupled, in terms of conveyance, via the vertical conveyors (20), which reach vertically just into the conveying plane (24), to the rack arrangement (14), wherein the FTF plane (24) comprises a travelling area (26) including a topology (60) of a plurality of way points (44) and segments (46) along which the FTF (28) are moved in a guided manner, wherein each of the segments (46) extends from one of the way points (44) to another adjacent one of the way points (44);
at least one target location, preferably a work station (AP), connected, in terms of material flow (12), via the FTF (28) to the vertical conveyors (20); and
a fleat manager (FM) having access to the topology and being configured to generate and output navigational information including individual travelling orders for the FTF (28), in order to transport the storage goods, which have not yet been transported by the vertical conveyors (20) in an absolute sequence into the FTF plane (24), along FTF-specifically generated individual travelling paths (40) from the vertical conveyors (20) to the at least one target location, and to hand over the same in the absolute sequence to the at least one target location, or vice versa;
wherein the storage and retrieval devices (22) retrieve the storage goods chaotically.

2. The system of claim 1, wherein the FTF plane (24) extends across at least an area (26) enclosing the vertical conveyors (20).

3. The system of claim 2, wherein the FTF plain (24) extends at least across an area (26) substantially completely enclosing additionally the racks (14) and the rack aisles (18) of the rack assembly (14).

4. The system of any of claims 1 to 3, wherein each of the individual travelling orders defines one of several possible travelling paths (40) between one of the vertical conveyors (20) and the at least one target location for the corresponding FTF (28) as well as comprises sequence and overtaking information so that such of the FTF (28), which transport the storage goods between the vertical conveyors (20) and the one target location, can over take each other and hand over the storage goods in the absolute sequence.

5. The system of any of claims 1 to 4, wherein each of the vertical conveyors (20) is arranged adjacent to several transfer locations (T), which preferably are formed respectively in a rack-integrated manner.

6. The system of any of claims 1 to 5, wherein a material-flow computer (MFR) is further provided, which is configured to generate path-optimized transport orders for the storage and retrieval devices (22).

7. The system of any of claims 1 to 6, wherein each of the FTF (28) is formed without a load-handling device and has a passive receiving device (34).

8. The system of any of claims 1 to 7, wherein the travelling area (26) further comprises at least one sequencing harp (50).

9. The system of any of claims 1 to 8, wherein the storage and retrieval devices (22) retrieve the articles in a path-optimized manner.

10. The system of claim 9, wherein even the vertical conveyors transport the retrieved articles in a path-optimized manner into the FTF plane.

11. The system of any of claims 1 to 10 comprising a plurality of target locations, wherein each of the target locations is coupable to each of the vertical conveyors (20) by means of the FTF (28), in terms of material flow, via several possible travelling paths (40) which can be assembled in a free manner.

12. The system of any of claims 1 to 11, wherein the topology further comprises location indications with regard to the vertical conveyors (20) and with regard to other travelling obstacles within the travelling area (26).

13. A method for supplying, in a sequence manner, a target location (AP) with a plurality of articles representing a picking order and being retrieved chaotically from racks (16) of a statically arranged rack assembly (14) by means of storage and retrieval devices (22), which can travel in rack aisles (18) between oppositely arranged racks (16), and being transported by means of a plurality of statically arranged vertical conveyors (20) vertically into a FTF plane (24), which comprises a plurality of autonomous movable driverless conveying vehicles, FTF, (28) and a travelling area (26), in order to be provided by means of the FTF (28) on the travelling area (26), which comprises a topology of way points (44) and segments (46), along which the FTF, (28) are movable in a guided manner, in an absolute sequence to the target location (AP), wherein each of the segments (46) extends from one of the way points (44) to an adjacent one of the way points (44), and wherein related segments (46) define a travelling path (40), comprising the following steps:
determining a quantity of rack locations (R) in which articles are stored which are to be retrieved according to the picking order;
generating SRD-transporting orders for the storage and retrieval devices (22) and transmitting the SRD-transporting orders to the corresponding storage and retrieval devices (22);
retrieving and delivering the articles by means of the storage and retrieval devices (22) in accordance with the SRD-transporting orders;
generating vertical-conveyor transporting orders for the vertical conveyors (20) and transmitting the corresponding vertical-conveyor transport orders to the corresponding vertical conveyors (20);
vertically transporting the articles into the FTF plane (24) by means of the vertical conveyors (20);
generating navigational information including individual travelling orders for the FTF (28) and transmitting the travelling orders to the corresponding FTF (28), in order to transport articles, which have not yet been transported by the vertical conveyors (20) in the absolute sequence into the FTF plane (24), along FTF-specific generated individual travelling paths (40) from the vertical conveyors (20) to the target location (AP), and to hand over the same in the absolute sequence to the target location (AP);
executing the travelling orders by the corresponding FTF (28), wherein the corresponding FTF (28) move along the FTF-specifically generated individual travelling paths (40) from the corresponding vertical conveyors (20) to the target location (AP) and hand over the articles in the absolute sequence to the target location (AP).

14. The method of claim 13, wherein the retrieval of the articles is performed in a path-optimized manner by the storage and retrieval devices (22).

15. The method of claim 13 or 14, wherein the FTF plane (24) extends at least across an area (26) enclosing the vertical conveyors (20) and preferably enclosing substantially completely the racks (14) and the rack aisles (18) of the rack arrangement (14) additionally.

## Revendications

1. Système d'entreposage et de préparation de commandes (10) comprenant :
un arrangement de rayonnages (14) disposé de manière statique qui possède une pluralité de rayonnages (16) et une pluralité de convoyeurs verticaux (20) disposés de manière statique, les rayonnages (16) possédant respectivement une pluralité d'emplacements de rayonnage (R) disposés les uns au-dessus des autres et les uns à côté des autres, dans lesquels des marchandises entreposées peuvent être stockées et
desquels elles peuvent être déstockées, les rayonnages (16) définissant au moins une travée de rayonnages (18) entre eux, plusieurs des convoyeurs verticaux (20) étant respectivement disposés soit adjacents latéralement au niveau des côtés longitudinaux des rayonnages (16) correspondants ou à l'intérieur des rayonnages (16) correspondants pour un raccordement en technique de manutention des travées de rayonnages (18) et
les convoyeurs verticaux (20) transportant les marchandises entreposées sensiblement dans le sens vertical ; et
une pluralité de transstockeurs (22) qui peuvent de se déplacer dans les travées de rayonnages (18), de préférence sur rails, les marchandises entreposées étant transportées sensiblement dans le sens horizontal le long des travées de rayonnages (18) entre les emplacements de rayonnage (R) et des postes de transfert (T), lesquels sont disposés dans les rayonnages (16) en tant que postes tampons à l'opposé des convoyeurs verticaux (20) ;
le système d'entreposage et de préparation de commandes étant **caractérisé par** :
au moins une flotte de véhicules de transport pouvant se déplacer de manière autonome sans conducteur, FTF, (28) ;
un plan des FTF (24), lequel est sensiblement dépourvu d'obstacles, notamment dépourvu d'emplacements de rayonnage (R), et qui s'étend au-dessous de, au-dessus de ou à travers l'arrangement de rayonnages (14), le plan des FTF (24) étant accouplé en technique de convoyage à l'arrangement de rayonnages (14) par le biais des convoyeurs verticaux (20) qui s'étendent verticalement jusque dans le plan de FTF (24), le plan des FTF (24) possédant une surface de déplacement (26) qui possède une topologie constituée de points de cheminement (44) et de segments (46) le long desquels les FTF (28) se déplacent de manière guidée, chacun des segments (46) s'étendant de l'un des points de cheminement (44) à un autre point de cheminement (44) voisin ;
au moins un point de destination, de préférence un poste de travail (AP) qui, du point de vue d'une manutention (12) par le biais des FTF (28), est relié aux convoyeurs verticaux (20) ; et
un gestionnaire de flotte (FM) qui a accès à la topologie et qui est conçu pour générer et délivrer des ordres de déplacement individuels pour les FTF (28) comprenant des informations de navigation afin de transporter les marchandises entreposées, qui ne sont pas encore transportées, par les convoyeurs verticaux (20), selon une séquence absolue dans le plan des FTF (24), le long de routes (40) individuelles générées spécifiquement pour les FTF par les convoyeurs verticaux (20) vers l'au moins un point de destination et les transférer à l'au moins un point de destination selon la séquence absolue ou inversement ;
les transstockeurs (22) déstockant les marchandises entreposées de manière chaotique.

2. Système selon la revendication 1, le plan des FTF (24) s'étendant au moins sur une surface (26) qui englobe les convoyeurs verticaux (20).

3. Système selon la revendication 2, le plan des FTF (24) s'étendant au moins sur une surface (26) qui englobe en plus sensiblement entièrement les rayonnages (14) et les travées de rayonnages (18) de l'arrangement de rayonnages (14).

4. Système selon l'une des revendications 1 à 3, chacun des ordres de déplacement individuels définissant une parmi plusieurs routes (40) possibles entre l'un des convoyeurs verticaux (20) et l'au moins un point de destination pour le FTF (28) correspondant et possède également des informations de séquence et de dépassement afin que les FTF (28) qui transportent les marchandises entreposées entre les convoyeurs verticaux (20) et ledit point de destination puissent se dépasser mutuellement et transférer les marchandises entreposées selon la séquence absolue.

5. Système selon l'une des revendications 1 à 4, chacun des convoyeurs verticaux (20) étant adjacent de plusieurs postes de transfert (T) qui sont respectivement réalisés de préférence intégrés dans les rayonnages.

6. Système selon l'une des revendications 1 à 5, un ordinateur de manutention (MFR) étant en outre présent, lequel est conçu pour générer des ordres de transport au trajet optimisé pour les transstockeurs (22).

7. Système selon l'une des revendications 1 à 6, chacun des FTF (28) étant configuré avec un logement passif (34) exempt d'appareil de levage.

8. Système selon l'une des revendications 1 à 7, la surface de déplacement (26) possédant en outre au moins une harpe de séquençage (50).

9. Système selon l'une des revendications 1 à 8, les transstockeurs (22) déstockant les articles avec optimisation du trajet.

10. Système selon la revendication 9, les convoyeurs verticaux transportant eux aussi les articles prélevés avec optimisation du trajet dans le plan des FTF.

11. Système selon l'une des revendications 1 à 10, lequel possède une pluralité de points de destination, chacun des points de destination pouvant être connecté au moyen des FTF (28), du point de vue d'une manutention, à chacun des convoyeurs verticaux (20) par le biais de plusieurs routes (40) possibles pouvant être assemblées librement.

12. Système selon l'une des revendications 1 à 11, la topologie possédant en outre des indications de lieu à propos des convoyeurs verticaux (20) et à propos d'autres obstacles au déplacement dans la surface de déplacement (26).

13. Procédé d'approvisionnement séquentiel d'un point de destination (AP) avec une pluralité d'articles, lesquels représentent un ordre de préparation de commande et lesquels sont déstockés de manière chaotique depuis des rayonnages (16) d'un arrangement de rayonnages (14) disposé de manière statique au moyen de transstockeurs (22) qui peuvent se déplacer dans des travées de rayonnages (18) entre des rayonnages (16) opposés, et lesquels sont transportés verticalement au moyen d'une pluralité de convoyeurs verticaux (20) disposés de manière statique dans un plan de FTF (24), lequel possède une pluralité de véhicules de transport pouvant se déplacer de manière autonome sans conducteur, FTF, (28) et une surface de déplacement (26), afin d'être fournis au point de destination (AP) selon une séquence absolue au moyen des FTF (28) sur la surface de déplacement (26), laquelle possède une topologie constituée de points de cheminement (44) et de segments (46) le long desquels les FTF (28) peuvent se déplacer de manière guidée, chacun des segments (46) s'étendant de l'un des points de cheminement (44) à un autre point de cheminement (44) voisin et les segments (46) connexes définissant une route (40), le procédé comprenant les étapes suivantes :
détermination d'une quantité d'emplacements de rayonnage (R) dans lesquels sont stockés des articles à déstocker selon l'ordre de préparation de commande ;
génération d'ordres de transport RBG pour les transstockeurs (22) et transmission des ordres de transport RBG aux transstockeurs (22) correspondants ;
déstockage et remise des articles au moyen des transstockeurs (22) conformément aux ordres de transport RBG ;
génération d'ordres de transport de convoyeur vertical pour les convoyeurs verticaux (20) et transmission des ordres de transport de convoyeur vertical correspondants aux convoyeurs verticaux (20) correspondants ;
transport vertical des articles dans le plan de FTF (24) au moyen des convoyeurs verticaux (20) ;
génération d'ordres de déplacement individuels pour les FTF (28) comprenant des informations de navigation et transmission des ordres de déplacement aux FTF (28) correspondants afin de transporter les articles, qui ne sont pas encore transportés, par les convoyeurs verticaux (20), selon une séquence absolue dans le plan des FTF (24), le long de routes (40) individuelles générées spécifiquement pour les FTF par les convoyeurs verticaux (20) vers le point de destination (AP) et les transférer au point de destination (AP) selon la séquence absolue ;
exécution des ordres de déplacement par les FTF (28) correspondants, les FTF (28) correspondants se déplaçant le long des routes (40) individuelles générées spécifiquement pour les FTF des convoyeurs verticaux (20) correspondants vers le point de destination (AP) et transférant les articles au point de destination (AP) selon la séquence absolue.

14. Procédé selon la revendication 13, le déstockage des articles par les transtockeurs (22) s'effectuant avec optimisation du trajet.

15. Procédé selon la revendication 13 ou 14, le plan de FTF (24) s'étendant sur au moins une surface (26) qui englobe les convoyeurs verticaux (20) et qui, de préférence, englobe en plus sensiblement entièrement les rayonnages (14) et les travées de rayonnages (18) de l'arrangement de rayonnages (14).
